(19) Europäisches Patentamt
European Patent Office
Office européen des brevets

(11) EP 2 740 759 A1

(12) # EUROPEAN PATENT APPLICATION

published in accordance with Art. 153(4) EPC

(43) Date of publication:
**11.06.2014 Bulletin 2014/24**

(21) Application number: **12825185.7**

(22) Date of filing: **22.08.2012**

(51) Int Cl.:
***C08L 15/00*** (2006.01) ***B60C 1/00*** (2006.01)
***C08K 3/36*** (2006.01) ***C08K 5/40*** (2006.01)

(86) International application number:
**PCT/JP2012/071120**

(87) International publication number:
**WO 2013/027746 (28.02.2013 Gazette 2013/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2011 JP 2011181868**

(71) Applicant: **Sumitomo Rubber Industries, Ltd.**
**Kobe-shi, Hyogo 651-0072 (JP)**

(72) Inventors:
- **OKABE Noboru**
  **Kobe-shi**
  **Hyogo 651-0072 (JP)**
- **UESAKA Kenichi**
  **Kobe-shi**
  **Hyogo 651-0072 (JP)**

(74) Representative: **Manitz, Finsterwald & Partner GbR**
**Martin-Greif-Strasse 1**
**80336 München (DE)**

(54) **RUBBER COMPOSITION AND PNEUMATIC TIRE**

(57) Provided are: a rubber composition that improves fuel economy, wet grip performance, and dry grip performance together while maintaining the balance between them; and a pneumatic tire whose component (particularly tread) includes the rubber composition. The invention relates to a rubber composition containing: a rubber component containing a copolymer; and a silica, wherein the copolymer is obtained by copolymerization of 1,3-butadiene, styrene, and a compound of formula (I) below, has an amino group at a first chain end and a functional group containing at least one atom selected from the group consisting of nitrogen, oxygen, and silicon at a second chain end, and has a Mw of $1.0\times10^5$-$2.5\times10^6$, and the silica has an average length $W^1$ between branched particles Z-Z inclusive of the branched particles Zs of 30-400 nm, wherein the branched particles Zs are each adjacent to at least three particles;

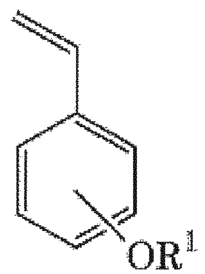

(I)

wherein $R^1$ represents a C1-C10 hydrocarbon group.

FIG.2

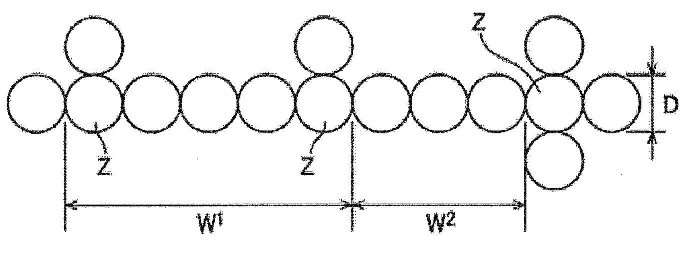


EP 2 740 759 A1

## Description

### TECHNICAL FIELD

The present invention relates to a rubber composition and a pneumatic tire formed using the composition.

### BACKGROUND ART

Recent concerns about resource or energy saving and environmental protection created a growing social demand for reducing carbon dioxide emissions. In the automotive industries, various strategies to reduce carbon dioxide emissions, such as weight reduction of vehicles and use of electric energy, have been attempted.

A common goal to be achieved by all vehicles is improved fuel economy, which can be achieved by improvement of the rolling resistance of tires. Another growing need for vehicles is improved driving safety. The fuel economy and safety of vehicles largely depend on the performance of tires used. The vehicle tires are increasingly required to have improved fuel economy, wet grip performance, handling stability, and durability. These properties of tires depend on various factors, such as the structure of tires and materials contained, and in particular depend on the properties of rubber compositions used for their treads, which are tire components to be in contact with a road. Accordingly, many technical improvements of tire rubber compositions have been considered and proposed, and are practically employed.

Tire tread rubber should meet the following requirements: low hysteresis loss for improved fuel economy; and high wet-skid resistance for improved wet grip performance. Low hysteresis loss and high wet-skid resistance are opposing properties, and improvement of either one of these properties is not enough to solve the above problems. One typical strategy to provide improved tire rubber compositions is to use improved materials, specifically to use rubber materials (e.g. styrene butadiene rubber, butadiene rubber) with an improved structure or to use reinforcing fillers (carbon black, silica), vulcanizing agents, and plasticizers with an improved structure or an improved composition.

A strategy to improve the fuel economy and wet grip performance together while maintaining the balance between them is to use silica as filler. Unfortunately, silica is difficult to disperse because of its strong self-aggregation properties. The strategy is needed to overcome this problem. Patent Literature 1 discloses a method for producing a rubber composition with good fuel economy and good wet grip performance by mixing a zinc aliphatic carboxylate and chain end-modified styrene butadiene rubber with a specific compound containing nitrogen and silicon. Still, there is a need for other methods.

### CITATION LIST

### PATENT LITERATURE

Patent Literature 1: JP 2010-111754 A

### SUMMARY OF INVENTION

### TECHNICAL PROBLEM

An object of the present invention is to provide a rubber composition that can solve the above problems, and improve the fuel economy, wet grip performance, and dry grip performance together while maintaining the balance between them, and a pneumatic tire, a component (in particular, a tread) of which includes the rubber composition.

### SOLUTION TO PROBLEM

The present invention relates to a rubber composition containing: a rubber component containing a copolymer; and a silica, wherein the copolymer is obtained by copolymerization of 1,3-butadiene, styrene, and a compound represented by formula (I) below, has an amino group at a first chain end and a functional group containing at least one atom selected from the group consisting of nitrogen, oxygen, and silicon at a second chain end, and has a weight average molecular weight of $1.0\times10^5$ to $2.5\times10^6$, and the silica has an average length $W^1$ between branched particles Z-Z inclusive of the branched particles Zs of 30 to 400 nm, wherein the branched particles Zs are each adjacent to at least three particles;

[Chem. 1]

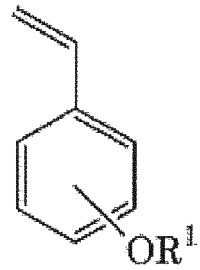

(I)

wherein $R^1$ represents a C1 to C10 hydrocarbon group.

The present invention also relates to a rubber composition, obtained by mixing a silica sol and a copolymer, wherein the copolymer is obtained by copolymerization of 1,3-butadiene, styrene, and a compound represented by formula (I) below, has an amino group at a first chain end and a functional group containing at least one atom selected from the group consisting of nitrogen, oxygen, and silicon at a second chain end, and has a weight average molecular weight of $1.0\times10^5$ to $2.5\times10^6$;

[Chem. 2]

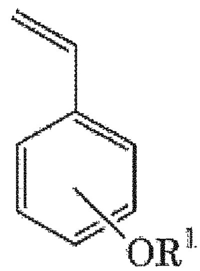

(I)

wherein $R^1$ represents a C1 to C10 hydrocarbon group.

The functional group is preferably an alkoxysilyl group, and is more preferably a combination of an alkoxysilyl group and an amino group.

The amino group at the first chain end is preferably an alkylamino group or a group represented by the following formula (II):

[Chem. 3]

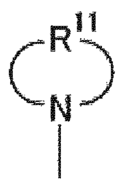

(II)

wherein $R^{11}$ represents a divalent C2 to C50 hydrocarbon group optionally containing at least one of nitrogen and oxygen atoms.

The group represented by the formula (II) is preferably a group represented by the following formula (III):

[Chem. 4]

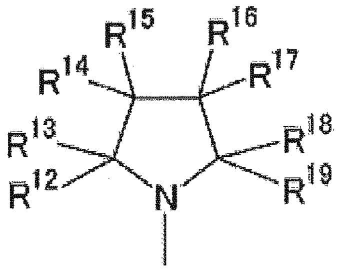

(III)

wherein $R^{12}$ to $R^{19}$, which may be the same or different, each represent a hydrogen atom or a C1 to C5 hydrocarbon group optionally containing at least one of nitrogen and oxygen atoms.

The copolymer preferably has, in addition to the amino group, an isoprene unit at the first chain end.

The copolymer preferably contains 0.05 to 35% by mass of the compound represented by the formula (I).

The copolymer is preferably obtained by copolymerizing 1,3-butadiene, styrene, and the compound represented by the formula (I) using a compound containing a lithium atom and an amino group as a polymerization initiator, and modifying a polymerizing end of the resulting copolymer with a modifier containing a functional group containing at least one atom selected from the group consisting of nitrogen, oxygen, and silicon.

The modifier is preferably a compound represented by the following formula (IV), (V), or (VI):

[Chem. 5]

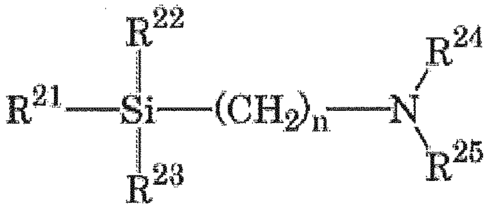

(IV)

wherein $R^{21}$, $R^{22}$, and $R^{23}$, which may be the same or different, each represent an alkyl, alkoxy, silyloxy, carboxyl, or mercapto group, or a derivative of any of these groups; $R^{24}$ and $R^{25}$, which may be the same or different, each represent a hydrogen atom or an alkyl group; and n represents an integer;

[Chem. 6]

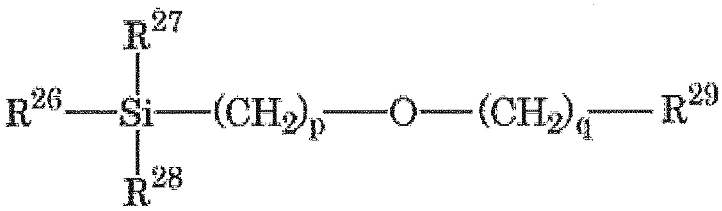

(V)

wherein $R^{26}$, $R^{27}$, and $R^{28}$, which may be the same or different, each represent an alkyl, alkoxy, silyloxy, carboxyl, or mercapto group, or a derivative of any of these groups; $R^{29}$ represents a cyclic ether group; and p and q each represent an integer;

[Chem. 7]

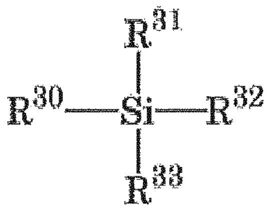

(VI)

wherein $R^{30}$ to $R^{33}$, which may be the same or different, each represent an alkyl, alkoxy, silyloxy, carboxyl, or mercapto group, or a derivative of any of these groups.

The polymerization initiator preferably contains an alkylamino group or a group represented by the following formula (II):

[Chem. 8]

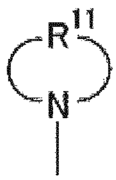

(II)

wherein $R^{11}$ represents a divalent C2 to C50 hydrocarbon group optionally containing at least one of nitrogen and oxygen atoms.

The group represented by the formula (II) is preferably a group represented by the following formula (III):

[Chem. 9]

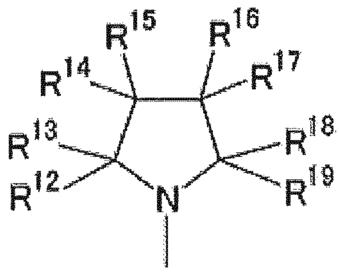

(III)

wherein $R^{12}$ to $R^{19}$, which may be the same or different, each represent a hydrogen atom or a C1 to C5 hydrocarbon group optionally containing at least one of nitrogen and oxygen atoms.

The polymerization initiator preferably contains an isoprene unit.

The rubber component contains the copolymer in an amount of not less than 5% by mass based on 100% by mass of the rubber component.

The rubber composition preferably contains the silica in an amount of 5 to 150 parts by mass relative to 100 parts by mass of the rubber component.

The silica preferably has an average aspect ratio $W^1/D$ determined between branched particles Z-Z inclusive the branched particles Zs of 3 to 100, wherein D is an average primary particle size.

The silica preferably has an average primary particle size D of 5 to 1000 nm.

The rubber composition preferably contains a silane coupling agent in an amount of 1 to 20 parts by mass relative to 100 parts by mass of silica.

The rubber composition is preferably for use as a rubber composition for a tire tread.

The present invention further relates to a pneumatic tire, formed from the rubber composition.

ADVANTAGEOUS EFFECTS OF INVENTION

The present invention provides a rubber composition containing a rubber component containing a copolymer, and a specific silica, wherein the copolymer is obtained by copolymerizing 1,3-butadiene, styrene, and a compound

represented by the formula (I), has an amino group at a first chain end and a functional group containing at least one atom selected from the group consisting of nitrogen, oxygen, and silicon at a second chain end, and has a weight average molecular weight in a specific range. This composition improves the fuel economy, wet grip performance, and dry grip performance together while maintaining the balance between them, and can be used for tire components (in particular, treads) to prepare pneumatic tires that are excellent in these performance properties.

BRIEF DESCRIPTION OF DRAWINGS

[Fig. 1] Fig. 1 is a schematic view illustrating branched particles Zs.
[Fig. 2] Fig. 2 is a schematic view indicating the average primary particle size D, the average length ($W^1$) between branched particles Z-Z inclusive of the branched particles Zs, and the average length ($W^2$) between branched particles Z-Z exclusive of the branched particles Zs of the silica.

DESCRIPTION OF EMBODIMENTS

The rubber composition of the present invention contains a rubber component containing a copolymer, and a silica (structure silica (linear silica)), wherein the copolymer is obtained by copolymerization of 1,3-butadiene, styrene, and a compound represented by formula (I) below, has an amino group at a first chain end and a functional group containing at least one atom selected from the group consisting of nitrogen, oxygen, and silicon at a second chain end, and has a weight average molecular weight of $1.0\times10^5$ to $2.5\times10^6$, and the silica has an average length $W^1$ between branched particles Z-Z inclusive of the branched particles Zs of 30 to 400 nm, wherein the branched particles Zs are each adjacent to at least three particles.

[Chem. 10]

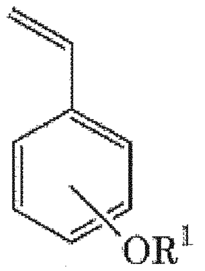

(I)

(In the formula, $R^1$ represents a C1 to C10 hydrocarbon group.)

The main chain of the copolymer is modified with the compound represented by the formula (I). The compound (in particular, oxygen in the compound) interacts with the filler to improve the dispersibility of the filler, and constrain the copolymer. This results in low hysteresis loss and, in turn, in improved fuel economy, and provides good wet grip performance and good dry grip performance. The amino group at the first chain end and the functional group at the second chain end of the copolymer also cause an interaction between the filler and both ends of the copolymer to improve the dispersibility of the filler and constrain the copolymer. Similarly, this results in low hysteresis loss and, in turn, in improved fuel economy, and provides good wet grip performance and good dry grip performance. The combination of the units derived from the compound represented by the formula (I), the amino group at the first chain end, and the functional group at the second chain end of the copolymer synergistically improves the fuel economy, wet grip performance, and dry grip performance.

In general, the addition of a functional group to a chain end of a polymer having a functional group at the main chain (a main chain-modified polymer) (or in other words, modification into a main chain- and chain end-modified polymer) does not always result in improvement in the above-mentioned performance properties. This is because different functional groups have different affinities for the filler. The very important factor to successfully improve the performance properties is combination of functional groups. In the present invention, the combination of the units derived from the compound represented by the formula (I), the amino group at the first chain end, and the functional group at the second chain end is very good. This good combination is presumed to synergistically improve the fuel economy, wet grip performance, and dry grip performance.

Conventional rubber compositions containing granular silica can have improved wet grip performance but fail to have improved fuel economy and improved dry grip performance at the same time. By contrast, the use of the structure

silica results in less amount of occluded rubber (rubber that is enclosed by silica aggregates so that it cannot be deformed), which is formed by aggregation of silica particles, and therefore reduces local stress concentration, i.e., local strain. This reduces the hysteresis loss of a tire at low tensile elongation (low strain) and thus reduces rolling resistance. Additionally, in tires at high tensile elongation (high strain) (e.g. during sudden braking or sharp turning), the structure silica becomes oriented along the circumferential direction of the tire tread. This orientation causes rubber areas around the structure silica particles to exponentially deform, and thus increases the hysteresis loss. Accordingly, the dry grip performance is improved. Moreover, the combined use of the copolymer and the structure silica synergistically increases their improving effects. Owing to these effects, the fuel economy, wet grip performance, and dry grip performance can be improved together to high levels while maintaining the balance between them.

The rubber composition containing the structure silica of the present invention can be prepared by, for example, mixing the copolymer and a silica sol.

[Rubber component]

<Copolymer>

The "copolymer" as used herein is included in the concept of the term "rubber component".

In the formula (I), $R^1$ is a C1 to C10 hydrocarbon group. If the number of carbon atoms is more than 10, higher costs may be required. Additionally, the fuel economy, wet grip performance, and dry grip performance may not be sufficiently improved. In order for the resulting polymer to have higher effects of improving the fuel economy, wet grip performance, and dry grip performance, the number of carbon atoms is preferably 1 to 8, more preferably 1 to 6, and still more preferably 1 to 3.

Examples of hydrocarbon groups for $R^1$ include monovalent aliphatic hydrocarbon groups, such as alkyl groups, and monovalent aromatic hydrocarbon groups, such as aryl groups. In order for the resulting polymer to have higher effects of improving the fuel economy, wet grip performance, and dry grip performance, $R^1$ is preferably an alkyl group, and more preferably a methyl or tert-butyl group.

In order for the resulting copolymer to have higher effects of improving the fuel economy, wet grip performance, and dry grip performance, compounds represented by the following formula (I-I) are preferred among compounds represented by the formula (I).

[Chem. 11]

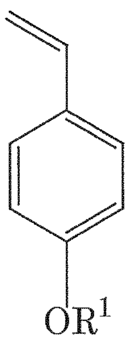

(I-I)

(In the formula (I-I), $R^1$ is defined as above for $R^1$ in the formula (I).)

Examples of the compound represented by the formula (I) include p-methoxystyrene, p-ethyoxystyrene, p-(n-propoxy)styrene, p-(tert-butoxy)styrene, and m-methoxystyrene. These may be used alone, or two or more of these may be used in combination.

The copolymer preferably contains the compound represented by the formula (I) in an amount of not less than 0.05% by mass, more preferably not less than 0.1% by mass, still more preferably not less than 0.3% by mass. Additionally, the amount is preferably not more than 35% by mass, more preferably not more than 20% by mass, still more preferably not more than 10% by mass, particularly preferably not more than 5% by mass, and most preferably not more than 2% by mass. If the amount is less than 0.05% by mass, the effects of improving the fuel economy, wet grip performance, and dry grip performance may not be obtained; if the amount is more than 35% by mass, higher costs may be required.

The copolymer preferably contains styrene in an amount of not less than 2% by mass, more preferably not less than 5% by mass, still more preferably not less than 10% by mass, particularly preferably not less than 15% by mass.

Additionally, the amount is preferably not more than 50% by mass, more preferably not more than 30% by mass, still more preferably not more than 25% by mass, and particularly preferably not more than 22% by mass. If the amount is less than 2% by mass, the wet grip performance and dry grip performance may be degraded; if the amount is more than 50% by mass, the fuel economy may be degraded.

The amount of 1,3-butadiene in the copolymer is not limited at all, and can be appropriately determined according to the amounts of other components. The amount is preferably not less than 15% by mass, more preferably not less than 20% by mass, and still more preferably not less than 60% by mass. Additionally, the amount is preferably not more than 97% by mass, more preferably not more than 85% by mass, and still more preferably not more than 80% by mass. If the amount of 1, 3-butadiene is less than 15% by mass, the wet grip performance and dry grip performance may be degraded; if the amount is more than 97% by mass, the fuel economy may be degraded.

The amounts of the compound represented by the formula (I), 1,3-butadiene, and styrene in the copolymer can be determined by the method described below in EXAMPLES.

The amino group (a primary amino group, secondary amino group, or tertiary amino group) at the first chain end may be an acyclic amino group or a cyclic amino group.

Examples of acyclic amines from which acyclic amino groups are derived include monoalkylamines, such as 1,1-dimethylpropylamine, 1,2-dimethylpropylamine, 2,2-dimethylpropylamine, 2-ethylbutylamine, pentylamine, 2,2-dimethylbutylamine, hexylamine, cyclohexylamine, octylamine, 2-ethylhexylamine, and isodecylamine; dialkylamines, such as dimethylamine, methylisobutylamine, methyl(t-butyl)amine, methylpentylamine, methylhexylamine, methyl(2-ethylhexyl)amine, methyloctylamine, methylnonylamine, methylisodecylamine, diethylamine, ethylpropylamine, ethylisopropylamine, ethylbutylamine, ethylisobutylamine, ethyl(t-butyl)amine, ethylpentylamine, ethylhexylamine, ethyl(2-ethylhexyl)amine, ethyloctylamine, dipropylamine, diisopropylamine, propylbutylamine, propylisobutylamine, propyl(t-butyl)amine, propylpentylamine, propylhexylamine, propyl(2-ethylhexyl)amine, propyloctylamine, isopropylbutylamine, isopropylisobutylamine, isopropyl(t-butyl)amine, isopropylpentylamine, isopropylhexylamine, isopropyl(2-ethylhexyl)amine, isopropyloctylamine, dibutylamine, diisobutylamine, di-t-butylamine, butylpentylamine, dipentylamine, and dicyclohexylamine; and laurylamine and methylbutylamine. These acyclic amines are converted into acyclic amino groups when a hydrogen atom bonded to the nitrogen of the acyclic amines is released.

Preferred acyclic amino groups are alkylamino groups (formed by releasing a hydrogen bonded to the nitrogen of the monoalkylamines and dialkylamines), and dialkylamino groups (formed by releasing a hydrogen bonded to the nitrogen of the dialkylamines) are more preferred, because these groups improve the fuel economy, wet grip performance, and dry grip performance more synergistically with the units derived from the compound represented by the formula (I) and the functional group at the second chain end. These alkylamino and dialkylamino groups preferably contain a C1 to C10 alkyl group, more preferably a C1 to C3 alkyl group.

Examples of cyclic amines from which cyclic amino groups are derived include aziridine, 2-methylaziridine, 2-ethylaziridine, compounds containing a pyrrolidine ring (pyrrolidine, 2-methylpyrrolidine, 2-ethylpyrrolidine, 2-pyrrolidone, succinimide), piperidine, 2-methylpiperidine, 3,5-dimethylpiperidine, 2-ethylpiperidine, 4-piperidinopiperidine, 2-methyl-4-piperidinopiperidine, 1-methylpiperazine, 1-methyl-3-ethyl piperazine morpholine, 2-methylmorpholine, 3,5-dimethylmorpholine, thiomorpholine, 3-pyrroline, 2,5-dimethyl-3-pyrroline, 2-phenyl-2-pyrroline, pyrazoline, 2-methylimidazole, 2-ethyl-4-methylimidazole, 2-phenylimidazole, pyrazole, pyrazole carboxylic acid, α-pyridone, γ-pyridone, aniline, 3-methylaniline, N-methylaniline, and N-isopropylaniline. These cyclic amines are converted into cyclic amino groups when a hydrogen atom bonded to the nitrogen of the cyclic amines is released.

Preferred cyclic amino groups are compounds represented by formula (II) below because these groups improve the fuel economy, wet grip performance, and dry grip performance more synergistically with the units derived from the compound represented by the formula (I) and the functional group at the second chain end.

[Chem. 12]

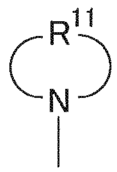

(II)

(In the formula, $R^{11}$ represents a divalent C2 to C50 hydrocarbon group optionally containing a nitrogen and/or oxygen atom.)

$R^{11}$ is a divalent C2 to C50 (preferably C2 to C10, more preferably C3 to C5) hydrocarbon group.

Examples of such hydrocarbon groups include C2 to C10. alkylene groups, C2 to C10 alkenylene groups, C2 to C10 alkynylene groups, and C6 to C10 arylene groups. In particular, such alkylene groups are preferred.

Among the groups represented by the formula (II), preferred are groups represented by the following formula (III).

[Chem. 13]

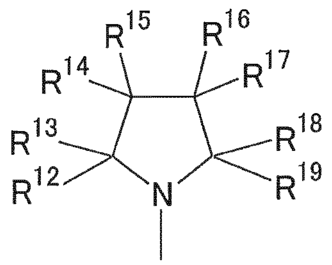

(III)

(In the formula, $R^{12}$ to $R^{19}$, which may be the same or different, each represent a hydrogen atom or a C1 to C5 hydrocarbon group optionally containing a nitrogen and/or oxygen atom.)

Examples of C1 to C5 (preferably C1 to C3) hydrocarbon groups for $R^{12}$ to $R^{19}$ are the same hydrocarbon groups as listed above for $R^1$. Among them, alkyl groups are preferred, and methyl and ethyl groups are more preferred.

$R^{12}$ to $R^{19}$ are each preferably hydrogen. More preferably, all of $R^{12}$ to $R^{19}$ are hydrogen.

The copolymer preferably has, in addition to the amino group, isoprene unit(s) (unit(s) represented by formula (VII) below) at the first chain end. This structure improves the fuel economy, wet grip performance, and dry grip performance more synergistically with the units derived from the compound represented by the formula (I) and the functional group at the second chain end. In particular, the combination of an alkylamino group and isoprene unit(s) is more preferred, and the combination of a dialkylamino group and isoprene unit(s) is still more preferred. For example, groups represented by the formula (A) are suitable.

[Chem. 14]

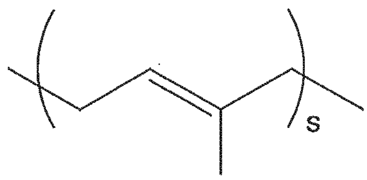

(VII)

(In the formula, s represents an integer of 1 to 100 (preferably 1 to 50, more preferably 1 to 10, and still more preferably 1 to 5.))

[Chem. 15]

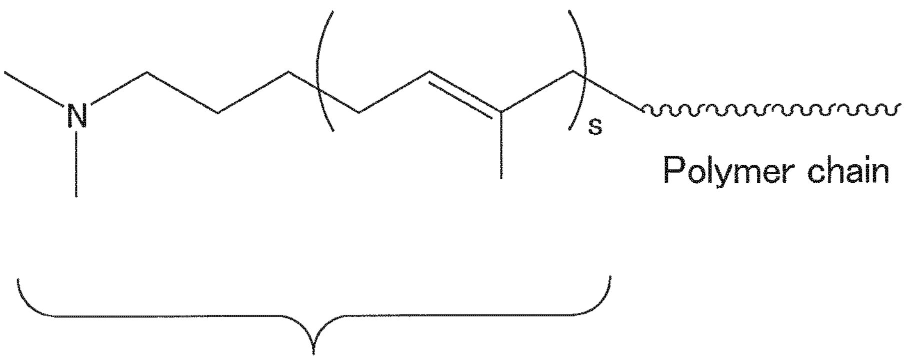


(A)

(In the formula, s represents an integer of 1 to 100 (preferably 1 to 50, more preferably 1 to 10, still more preferably 1 to 5.))

Examples of the functional group containing at least one atom selected from the group consisting of nitrogen,

oxygen, and silicon at the second chain end include amino, amide, alkoxysilyl, isocyanate, imino, imidazole, urea, ether, carbonyl, carboxyl, hydroxyl, nitril, and pyridyl groups.

The functional group at the second chain end is preferably an alkoxysilyl, amino, or ether group, and is more preferably a combination of an alkoxysilyl group and an amino group, because these groups improve the fuel economy, wet grip performance, and dry grip performance more synergistically with the units derived from the compound represented by the formula (I) and the amino group at the first chain end.

Examples of amino groups include the same groups as listed above for the amino group at the first chain end. In particular, alkylamino groups are preferred, and dialkylamino groups are more preferred. These alkylamino and dialkylamino groups preferably contain a C1 to C10 alkyl group, more preferably a C1 to C3 alkyl group.

Examples of alkoxysilyl groups include methoxysilyl, ethoxysilyl, propoxysilyl, and butoxysilyl groups. These alkoxysilyl groups preferably contain a C1 to C10 alkoxy group, more preferably a C1 to C3 alkoxy group.

<Method for preparing copolymer>

The copolymer of the present invention can be prepared by, for example, copolymerizing 1, 3-butadiene, styrene, and the compound represented by the formula (I) using a compound containing a lithium atom and an amino group as a polymerization initiator, and modifying a polymerizing end of the polymer with a modifier that contains a functional group containing at least one atom selected from the group consisting of nitrogen, oxygen, and silicon. The following specifically describes how to prepare the copolymer.

(Polymerization method)

The copolymerization of monomer components including styrene, 1,3-butadiene, and the compound represented by the formula (I) can be accomplished by any polymerization method without limitation, and specifically any of solution polymerization, vapor phase polymerization, and bulk polymerization can be used. In particular, solution polymerization is preferred for reasons of stability of the compound represented by the formula (I). The polymerization may be carried out in either a batch-wise or continuous manner.

In the case of solution polymerization, a solution having a monomer concentration (a combined concentration of styrene, 1, 3-butadiene, and the compound represented by the formula (I)) of not lower than 5% by mass is preferably used. The monomer concentration is more preferably not lower than 10% by mass. The use of a solution having a monomer concentration of less than 5% by mass provides only a small amount of the copolymer, and may increase costs. The monomer concentration of the solution is preferably not more than 50% by mass, and more preferably not more than 30% by mass. A solution having a monomer concentration of more than 50% by mass is too viscous to stir, and therefore may not allow the polymerization to successfully proceed.

(Polymerization initiator for anionic polymerization)

In the case of anionic polymerization, a compound containing a lithium atom and an amino group is preferably used as a polymerization initiator. This use results in a conjugate diene polymer (living polymer) having an amino group at the polymerization initiation end and an active polymerization site at the other end.

Since the amino group of the polymerization initiator (the compound containing a lithium atom and an amino group) itself will remain at the polymerization initiation end, the amino group is suitably a group as listed above as the acyclic or cyclic amino group. Preferred forms are also the same.

The compound containing a lithium atom and an amino group can be prepared by, for example, reacting a lithium compound and an amino group-containing compound (e.g. a lithium amide compound).

The lithium compound is not limited at all, and preferred examples include hydrocarbyllithiums. Preferred are hydrocarbyllithiums having a C2 to C20 hydrocarbyl group, and specific examples include ethyllithium, n-propyllithium, isopropyllithium, n-butyllithium, sec-butyllithium, tert-octyllithium, n-decyllithium, phenyllithium, 2-naphtyllithium, 2-butylphenyllithium, 4-phenyl-butyllithium, cyclohexyllithium, cyclopentyllithium, and a reaction product of diisopropenylbenzene and butyllithium. Among these, n-butyllithium is particularly suitable.

Since the amino group of the amino group-containing compound will remain at the polymerization initiation end, the amino group-containing compound may suitably be a compound as listed above as the acyclic amine from which the acyclic amino group is derived or the cyclic amine from which the cyclic amino group is derived (in particular, a pyrrolidine ring-containing compound). Accordingly, the amino group-containing compound is preferably an alkylamino group-containing compound (a monoalkylamine or dialkylamine), and more preferably a dialkylamino group-containing compound (dialkylamine). The preferred number of carbon atoms in the alkyl group of the alkylamino or dialkylamino group is as defined for the acyclic amino group.

The amino group-containing compound is preferably a compound having a group represented by the formula

(II), and more preferably a compound having a group represented by the formula (III). Preferred examples of groups represented by the formulas (II) and (III) are as listed above for the cyclic amino group.

The reaction between the lithium compound and the amino group-containing compound can be carried out under any conditions without limitation. For example, the lithium compound and the amino group-containing compound are dissolved in a hydrocarbon solvent, and reacted at 0 to 80°C for 0.01 to 1 hour. The lithium compound and the amino group-containing compound are used at a molar ratio [(lithium compound) / (amino group-containing compound)] of, but not limited to, 0.8 to 1.5, for example.

The hydrocarbon solvent used in the reaction is not limited at all, and is preferably a C3 to C8 hydrocarbon solvent. Examples thereof include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone, or two or more of these may be used in combination.

The compound containing a lithium atom and an amino group (e.g. a lithium amide compound) can be prepared by reacting the lithium compound and the amino group-containing compound, or alternatively, a commercial product may be used. In the case of reacting the lithium compound and the amino group-containing compound, the lithium compound and the amino group-containing compound may be reacted before being combined with the monomer components, or may be reacted in the presence of the monomer components. Since the amino group-containing compound is more reactive than the monomer components, the reaction between the lithium compound and the amino group-containing compound preferentially proceeds even in the presence of the monomer components.

Examples of lithium amide compounds include lithium hexamethyleneimide, lithium pyrrolidide, lithium piperidide, lithium heptamethyleneimide, lithium dodecamethyleneimide, lithium dimethylamide, lithium diethylamide, lithium dibutylamide, lithium dipropylamide, lithium diheptylamide, lithium dihexylamide, lithium dioctylamide, lithium di-2-ethylhexylamide, lithium didecylamide, lithium-N-methylpiperazide, lithium ethylpropylamide, lithium ethylbutylamide, lithium ethylbenzylamide, lithium methylphenethylamide, and compounds represented by formula shown below. In particular, lithium pyrrolidide, lithium dimethylamide, and lithium diethylamide are preferred.

Other preferred examples of the compound containing a lithium atom and an amino group include compounds containing an amino group and isoprene unit(s) (unit(s) represented by formula (VII) below). These compounds improves the fuel economy, wet grip performance, and dry grip performance more synergistically with the units derived from the compound represented by the formula (I) and the functional group at the second terminal.

[Chem. 16]

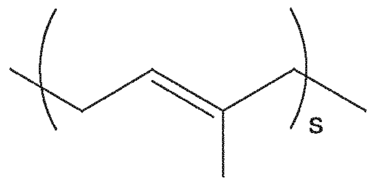

(VII)

(In the formula, s represents an integer of 1 to 100 (preferably 1 to 50, more preferably 1 to 10, still more preferably 1 to 5.))

In particular, compounds containing an alkylamino group and the isoprene unit(s) are preferred, and compounds containing a dialkylamino group and the isoprene unit(s) are more preferred. For example, compounds represented by the formula below are preferred. Compounds represented by the formula below include the compound of the formula with S=2 sold from FMC Lithium under the name of AI-200.

[Chem. 17]

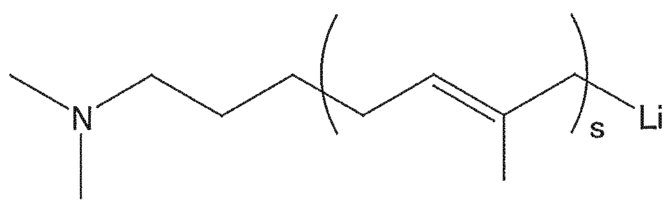

(In the formula, s represents an integer of 1 to 100 (preferably 1 to 50, more preferably 1 to 10, still more preferably 1 to 5.))

(Anionic polymerization method)

The anionic polymerization to produce the copolymer using the compound containing a lithium atom and an amino group as a polymerization initiator can be accomplished by any method without limitation, and conventional known methods can be used. Specifically, styrene, 1,3-butadiene, and the compound represented by the formula (I) are anionically polymerized in an inert organic solvent, such as a hydrocarbon solvent (e.g. an aliphatic, alicyclic, or aromatic hydrocarbon compound), using the compound containing a lithium atom and an amino group as a polymerization initiator and optionally a randomizer. After the anionic polymerization is completed, known antioxidants, alcohols to stop the polymerization, and other agents may be optionally added.

(Hydrocarbon solvent used in anionic polymerization)

The hydrocarbon solvent is preferably one having 3 to 8 carbon atoms, and examples include propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, and ethylbenzene. These may be used alone, or two or more of these may be used in combination.

(Randomizer used in anionic polymerization)

The randomizer is a compound that controls the microstructure of conjugated diene units in the copolymer (for example, to increase the content of 1,2-butadiene units), and the distribution of monomer units in the copolymer (for example, to randomize the distribution of butadiene units and styrene units in a butadiene-styrene copolymer). The randomizer is not limited at all, and any of compounds conventionally known as randomizers can be used. Examples include ethers and tertiary amines, such as dimethoxybenzene, tetrahydrofuran, dimethoxyethane, diethylene glycol dibutyl ether, diethylene glycol dimethyl ether, bistetrahydrofurylpropane, triethylamine, pyridine, N-methylmorpholine, N,N,N',N'-tetramethylethylenediamine, and 1,2-dipiperidinoethane. Other examples include potassium salts, such as potassium-t-amylate, and potassium-t-butoxide, and sodium salts, such as sodium-t-amylate.

The randomizer is preferably used in an amount of not less than 0.01 molar equivalents, more preferably of not less than 0.05 molar equivalents relative to the polymerization initiator. The use of less than 0.01 molar equivalents of the randomizer tends to have a small effect and result in insufficient randomization. Additionally, the amount of randomizer is preferably not more than 1000 molar equivalents, and more preferably not more than 500 molar equivalents relative to the polymerization initiator. The use of more than 1000 molar equivalents of the randomizer tends to largely change the rate of the reaction of monomers and end up being insufficient randomization.

The modification with the modifier can be accomplished by any method without limitation, and known methods can be used. For example, a copolymer having a modified main chain is synthesized by anionic polymerization, and the copolymer is contacted with the modifier so that the anionic end of the copolymer reacts with the functional group of the modifier to modify the end of the copolymer. Typically, the modifier is reacted with the copolymer in an amount of 0.01 to 10 parts by mass relative to 100 parts by mass of the copolymer.

<Modifier>

Examples of the modifier include 3-glycidoxypropyltrimethoxysilane, (3-triethoxysilylpropyl)tetrasulfide, 1-(4-N,N-dimethylaminophenyl)-1-phenylethylene, 1,1-dimethoxytrimethylamine, 1,2-bis(trichlorosilyl)ethane, 1,3,5-tris(3-triethoxysilylpropyl)isocyanurate, 1,3,5-tris(3-trimethoxysilylpropyl)isocyanurate, 1,3-dimethyl-2-imidazolidinone, 1,3-propanediamine, 1,4-diaminobutane, 1-[3-(triethoxysilyl)propyl]-4,5-dihydroimidazole, 1-glycidyl-4-(2-pyridyl)piperazinc, 1-glycidyl-4-phenylpiperazine, 1-glycidyl-4-methylpiperazine, 1-glycidyl-4-methylhomopiperazine, 1-glycidylhexamethyleneimine, 11-aminoundecyltriethoxysilane, 11-aminoundecyltrimethoxysilane, 1-benzyl-4-glycidylpiperazine, 2-(3,4-epoxycyclohexyl)ethyltrimethoxysilane, 2-(4-morpholinodithio)benzothiazole, 2-(6-aminoethyl)-3-aminopropyltrimethoxysilane, 2-(triethoxysilylethyl)pyridine, 2-(trimethoxysilylethyl)pyridine, 2-(2-pyridylethyl)thiopropyltrimethoxysilane, 2-(4-pyridylethyl)thiopropyltrimethoxysilane, 2,2-diethoxy-1,6-diaza-2-silacyclooctane, 2,2-dimethoxy-1,6-diaza-2-silacyclooctane, 2,3-diohloro-1,4-naphthoquinone, 2,4-dinitrobenzenesulfonyl chloride, 2,4-tolylene diisocyanate, 2-(4-pyridylethyl)triethoxysilane, 2-(4-pyridylethyl)trimethoxysilane, 2-cyanoethyltriethoxysilane, 2-tributylstanyl-1,3-butadiene, 2-(trimethoxysilylethyl)pyridine, 2-vinylpyridine, 2-(4-pyridylethyl)triethoxysilane, 2-(4-pyridylethyl)trimethoxysilane, 2-lauryl thioethyl phenyl ketone, 3-(1-hexamethyleneimino)propyl(triethoxy)silane, 3-(1,3-dimethylbutylidene)aminopropyltriethoxysilane, 3-(1,3-dimethylbutylidene)aminopropyltrimethoxysilane, 3-(2-aminoethylaminopropyl)trimethoxysilane, 3-(m-aminophenoxy)propyltrimethoxysilane, 3-(N,N-dimethylamino)propyltriethoxysilane, 3-(N,N-dimethylamino)propyltrimethoxysilane, 3-(N-methylamino)propyltriethoxysilane, 3-(N-methylamino)propyltrimethoxysilane, 3-(N-allylamino)propyltrimethoxysilane, 3,4-diaminobenzoic acid, 3-aminopropyldimethylethoxysilane, 3-aminopropyltriethoxysilane, 3-aminopropyltrimethoxysilane, 3-aminopropyltris(methoxydiethoxy)silane, 3-aminopropyldiisopropylethoxysilane, 3-isocyanatopropyltriethoxysilane, 3-glycidoxypropyltriethoxysilane, 3-glycidoxypropyltrimethoxysilane, 3-glycidoxypropylmethyldimethoxysilane, 3-diethylaminopropyltrimethoxysilane, 3-diethoxy(methyl)silylpropyl succinic anhydride, 3-(N,N-diethylaminopropyl)triethoxysilane, 3-(N,N-diethylaminopropyl)trimethoxysilane, 3-(N,N-dimethylaminopropyl)diethoxymethylsilane, 3-(N,N-dimethylaminopropyl)triethoxysilane, 3-(N,N-dimethylaminopropyl)trimethoxysilane, 3-triethoxysilylpropyl succinic anhydride, 3-triethoxysilylpropyl acetic anhydride, 3-triphenoxysilylpropyl succinic anhydride, 3-triphenoxysilylpropyl acetic anhydride, 3-trimethoxysilylpropyl benzothiazole tetrasulfide, 3-hexamethyleneiminopropyltriethoxysilane, 3-mercaptopropyltrimethoxysilane, (3-triethoxysilylpropyl)diethylenetriamine, (3-trimethoxysilylpropyl)diethylenetriamine, 4,4'-bis(diethylamino)benzophenone, 4,4'-bis(dimethylamino)benzophenone, 4'-(imidazol-2-yl)-acetophenone, 4-[3-(N,N-diglycidylamino)propyl]morpholine, 4-glycidyl-2,2,6,6-tetramethylpiperidinyloxy, 4-aminobutyltriethoxysilane, 4-vinylpyridine, 4-morpholinoacetophenone, 4-morpholinobenzophenone, m-aminophenyltrimethoxysilane, N-(1,3-dimethylbutylidene)-3-(triethoxysilyl)-1-propaneamine, N-(1,3-dimethylbutylidene)-3-(trimethoxysilyl)-1-propaneamine, N-(1-methylethylidene)-3-(triethoxysilyl)-1-propaneamine, N-(2-aminoethyl)-3-aminopropylmethyldiethoxysilane, N-(2-aminoethyl)-3-aminopropylmethyldimethoxysilane, N-(2-aminoethyl)-3-aminopropyltriethoxysilane, N-(2-aminoethyl)-3-aminopropyltrimethoxysilane, N-(2-aminoethyl)-11-aminoundecyltriethoxysilane, N-(2-aminoethyl)-11-aminoundecyltrimethoxysilane, N-(2-aminoethyl)-3-aminoisobutylmethyldiethoxysilane, N-(2-aminoethyl)-3-aminoisobutylmethyldimethoxysilane, N-(3-diethoxymethylsilylpropyl)succinimide, N-(3-triethoxysilylpropyl)-4,5-dihydroimidazole, N-(3-triethoxysilylpropyl)pyrrole, N-(3-trimethoxysilylpropyl)pyrrole, N-3-[amino(polypropyleneoxy)]aminopropyltrimethoxysilane, N-[5-(triethoxysilyl)-2-aza-1-oxopentyl]caprolactam, N-[5-(trimethoxysilyl)-2-aza-1-oxopentyl]caprolactam, N-(6-aminohexyl)aminomethyltriethoxysilane, N-(6-aminohexyl)aminomethyltrimethoxysilane, N-allyl-aza-2,2-diethoxysilacyclopentane, N-allyl-aza-2,2-dimethoxysilacyclopentane, N-(cyclohexylthio)phthalimide, N-n-butyl-aza-2,2-diethoxysilacyclopentane, N-n-butyl-aza-2,2-dimethoxysilacyclopentane, N,N,N',N'-tetraethylaminobenzophenone, N,N,N',N'-tetramethylthiourea, N,N,N',N'-tetramethylurea, N,N'-ethyleneurea, N,N'-diethylaminobenzophenone, N,N'-diethylaminobenzophenone, N,N'-diethylaminobenzofuran, methyl N,N'-diethylcarbamate, N,N'-diethylurea, (N,N-diethyl-3-aminopropyl)triethoxysilane, (N,N-diethyl-3-aminopropyl)trimethoxysilane, N,N-dioctyl-N'-triethoxysilylpropylurea, N,N-dioctyl-N'-trimethoxysilylpropylurea, methyl N,N-diethylcarbamate, N,N-diglycidylcyclohexylamine, N,N-dimethyl-o-toluidine, N,N-dimethylaminostyrene, N,N-diethylaminopropylacrylamide, N,N-dimethylaminopropylacrylamide, N-ethylaminoisobutyltriethoxysilane, N-ethylaminoisobutyltrimethoxysilane, N-ethylaminoisobutylmethyldiethoxysilane, N-oxydiethylene-2-benzothiazolesulfenamide, N-cyclohexylaminopropyltriethoxysilane, N-cyclohexylaminopropyltrimethoxysilane, N-methylaminopropylmethyldimethoxysilane, N-methylaminopropylmethyldiethoxysilane, N-vinylbenzylazacycloheptane, N-phenylpyrrolidone, N-phenylaminopropyltriethoxysilane, N-phenylaminopropyltrimethoxysilane, N-phenylaminomethyltriethoxysilane, N-phenylaminomethyltrimethoxysilane, n-butylaminopropyltriethoxysilane, n-butylaminopropyltrimethoxysilane, N-methylaminopropyltriethoxysilane, N-methylaminopropyltrimethoxysilane, N-methyl-2-piperidone, N-methyl-2-pyrrolidone, N-methyl-ε-caprolactam, N-methylindolinone, N-methylpyrrolidone, p-(2-dimethylaminoethyl)styrene, p-aminophenyltrimethoxysilane, γ-glycidoxypropyltrimethoxysilane, γ-methacryloxypropyltrimethoxysilane, (aminoethylamino)-3-isobutyldiethoxysilane, (aminoethylamino)-3-isobutyldimethoxysilane, (aminoethylaminomethyl)phenethyltriethoxysilane, (aminoethylaminomethyl)phenethyltrimethoxysilane, acrylic acid, diethyl adipate, acetamidopropyltrimethoxysilane, aminophenyltrimethoxysilane, aminobenzophenone, ureidopropyltriethoxysilane, ureidopropyltrimethoxysilane, ethylene oxide, octadecyldimethyl(3-trimethoxysilylpropyl)ammonium chloride, glycidoxypropyltriethoxysilane, glycidoxypropyltrimethoxysilane, glycerol tristearate, chlorotriethoxysilane, chloropropyltriethoxysilane, chloropolydimethylsiloxane, chloromethyldiphenoxysilane, diallyl diphenyltin, diethylaminomethyltriethoxysilane, diethylaminomethyltrimethoxysilane, diethyl(glycidyl)amine, diethyldithiocarbamic acid 2-benzothiazolyl ester, diethoxydichlorosilane, (cyclohexylaminomethyl)triethoxysilane, (cyclohexylaminomethyl)trimethoxysilane, diglycidylpolysiloxane, dichlorodiphenoxysilane, dicyclohexylcarbodiimide, divinylbenzene, diphenylcarbodiimide, diphenylcyanamide, diphenylmethanediisocyanate, diphenoxymethylchlorosilane, dibutyldichlorotin, dimethyl(acetoxy-methylsiloxane)polydimethylsiloxane, dimethylaminomethyltriethoxysilane, dimethylaminomethyltrimethoxysilane, dimethyl(methoxy-methylsiloxane)polydimethylsiloxane, dimethylimidazolidinone, dimethylethyleneurea, dimethyl dichlorosilane, dimethylsulfamoyl chloride, silsesquioxane, sorbitan trioleate, sorbitan monolaurate, titanium tetrakis(2-ethylhexyoxide), tetraethoxysilane, tetraglycidyl-1,3-bisaminomethylcyclohexane, tetraphenoxysilane, tetramethylthiuram disulfide, tetramethoxysilane, triethoxyvinylsilane, tris(3-trimethoxysilylpropyl)cyanurate, triphenylphosphate, triphenoxychlorosilane, triphenoxymethyl silicon, triphenoxymethylsilane, carbon dioxide, bis(triethoxysilylpropyl)amine, bis(trimethoxysilylpropyl)amine, bis[3-(triethoxysilyl)propyl]ethylenediamine, bis[3-(trimethoxysilyl)propyl]ethylenediamine, bis[3-(triethoxysilyl)propyl]urea, bis[(trimethoxysilyl)propyl]urea, bis(2-hydroxymethyl)-3-aminopropyltriethoxysilane, bis(2-hydroxymethyl)-3-aminopropyltrimethoxysilane, tin bis(2-ethylhexanoate), bis(2-methylbutoxy)methyl chlorosilane, bis(3-triethoxysilylpropyl)tetrasulfide, bisdiethylaminobenzophenone, bisphenol A diglycidyl ether, bisphenoxyethanolfluorene diglycidyl ether, bis(methyldiethoxysilylpropyl)amine, bis(methyldimethoxysilylpropyl)-N-methylamine, hydroxymethyltriethoxysilane, vinyltris(2-ethylhexyloxy)silane, vinylbenzyldiethylamine, vinylbenzyl dimethylamine, vinylbenzyl tributyltin, vinylbenzylpiperidine, vinylbenzylpyrrolidine, pyrrolidine, phenylisocyanate,

phenylisothiocyanate, (phenylaminomethyl)methyldimethoxysilane, (phenylaminomethyl)methyldiethoxysilane, phthalic amide, hexamethylene diisocyanate, benzylidene aniline, poly(diphenylmethane diisocyanate), polydimethylsiloxane, methyl-4-pyridyl ketone, methylcaprolactam, methyltriethoxysilane, methyltriphenoxysilane, methyl laurylthiopropionate, and silicon tetrachloride.

The modifier is preferably a compound represented by any one of formulas (IV), (V), and (VI) below, more preferably a compound represented by the formula (IV) or (V), and still more preferably a compound represented by the formula (IV) because these compounds improve the fuel economy, wet grip performance, and dry grip performance more synergistically with the units derived from the compound represented by the formula (I) and the amino group at the first chain end.

[Chem. 18]

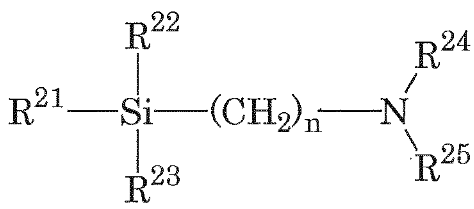

(IV)

(In the formula, $R^{21}$, $R^{22}$, and $R^{23}$, which may be the same or different, each represent an alkyl, alkoxy, silyloxy, carboxyl (-COOH), or mercapto (-SH) group, or a derivative of any of these groups; $R^{24}$ and $R^{25}$, which may be the same or different, each represent a hydrogen atom or an alkyl group; and n represents an integer.)

[Chem. 19]

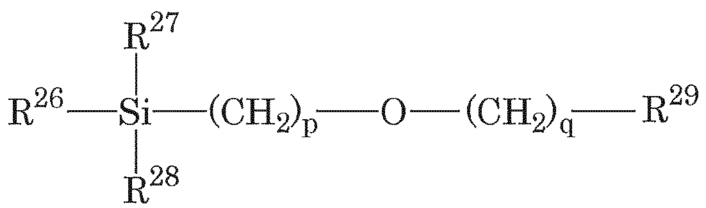

(V)

(In the formula, $R^{26}$, $R^{27}$, and $R^{28}$, which may be the same or different, each represent an alkyl, alkoxy, silyloxy, carboxyl (-COOH), or mercapto (-SH) group, or a derivative of any of these groups; $R^{29}$ represents a cyclic ether group; and p and q each represent an integer.)

[Chem. 20]

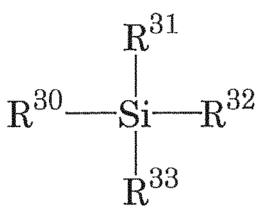

(VI)

(In the formula, $R^{30}$ to $R^{33}$, which may be the same or different, each represent an alkyl, alkoxy, silyloxy, carboxyl (-COOH), or mercapto (-SH) group, or a derivative of any of these groups.)

As for compounds represented by the formula (IV), examples of alkyl groups for $R^{21}$, $R^{22}$, and $R^{23}$ include C1 to C4 (preferably C1 to C3) alkyl groups such as a methyl group. Examples of alkoxy groups for $R^{21}$, $R^{22}$, and $R^{23}$ include C1 to C8 (preferably C1 to C6, more preferably C1 to C4) alkoxy groups such as a methoxy group. The term "alkoxy group" is intended to include cycloalkoxy and aryloxy groups. Examples of silyloxy groups for $R^{21}$, $R^{22}$, and $R^{23}$ include silyloxy groups (e.g. trimethylsilyloxy and tribenzylsilyloxy groups) having C1 to C20 aliphatic or aromatic groups as substituents.

As for compounds represented by the formula (IV), examples of alkyl groups for $R^{24}$ and $R^{25}$ include the alkyl groups mentioned above (the alkyl groups listed for $R^{21}$, $R^{22}$, and $R^{23}$).

In order to ensure larger effects of improving the fuel economy, wet grip performance, and dry grip performance, $R^{21}$, $R^{22}$, and $R^{23}$ are each preferably an alkoxy group, and $R^{24}$ and $R^{25}$ are each preferably an alkyl group.

For reasons of availability, n (integer) is preferably 0 to 5, more preferably 2 to 4, and most preferably 3. If n is 6 or more, higher costs are required.

Specific examples of the compound represented by the formula (IV) include 3-(N,N-dimethylamino)propyltriethoxysilane and 3-(N,N-dimethylamino)propyltrimethoxysilane, which are already listed above as examples of the modifier. In particular, 3-(N,N-dimethylamino)propyltrimethoxysilane is preferred.

As for compounds represented by the formula (V), $R^{26}$, $R^{27}$, and $R^{28}$ are defined as above for $R^{21}$, $R^{22}$, and $R^{23}$ of compounds represented by the formula (IV). In order to ensure large effects of improving the fuel economy, wet grip performance, and dry grip performance, $R^{26}$, $R^{27}$, and $R^{28}$ are each preferably an alkoxy group.

As for compounds represented by the formula (V), examples of cyclic ether groups for $R^{29}$ include cyclic ether groups containing one ether bond, such as an oxirane group, cyclic ether groups containing two ether bonds, such as a dioxolane group, and cyclic ether groups containing three ether bonds, such as a trioxane group. In particular, in order to ensure large effects of improving the fuel economy, wet grip performance, and dry grip performance, cyclic ether groups containing one ether bond are preferred, and an oxirane group is more preferred. The number of carbon atoms in these cyclic ether groups is preferably 2 to 7, and more preferably 2 to 4. Additionally, cyclic ether groups with a ring structure free of unsaturated bonds are preferred.

For reasons of availability and reactivity, p (integer) is preferably 0 to 5, more preferably 2 to 4, and most preferably 3. If p is 6 or more, higher costs are required.

For reasons of availability and reactivity, q (integer) is preferably 0 to 5, more preferably 1 to 3, and most preferably 1. If q is 6 or more, higher costs are required.

Specific examples of compounds represented by the formula (V) include 3-glycidoxypropyltrimethoxysilane and 3-glycidoxypropyltriethoxysilane, which are already listed above as examples of the modifier. In particular, 3-glycidoxypropyltrimethoxysilane is preferred.

As for compounds represented by the formula (VI), $R^{30}$ to $R^{33}$ are defined as above for $R^{21}$, $R^{22}$, and $R^{23}$ of compounds represented by the formula (IV). In order to ensure larger effects of improving the fuel economy, wet grip performance, and dry grip performance, $R^{30}$ to $R^{33}$ are each preferably an alkoxy group.

Specific examples of compounds represented by the formula (VI) include tetraethoxysilane and tetramethoxysilane, which are already listed above as examples of the modifier. In particular, tetraethoxysilane is preferred.

In addition to the compounds represented by the formulas (IV), (V), and (VI), N-(3-triethoxysilylpropyl)-4,5-dihydroimidazole, silicon tetrachloride, and the like are also preferably used as the modifier.

In the present invention, after the modification reaction with the modifier, known antioxidants, alcohols to stop the polymerization, and other agents may be optionally added.

The weight average molecular weight Mw of the copolymer is $1.0 \times 10^5$ to $2.5 \times 10^6$. If the Mw is less than $1.0 \times 10^5$, the fuel economy may be degraded; if the Mw is more than $2.5 \times 10^6$, the processability may be degraded. The lower limit of the Mw is preferably not less than $2.0 \times 10^5$, more preferably not less than $3.0 \times 10^5$, and the upper limit is preferably not more than $1.5 \times 10^6$, and more preferably not more than $1.0 \text{x} 10^6$.

The Mw can be appropriately controlled by, for example, varying the amount of polymerization initiator used in the polymerization, and can be determined by the method described below in EXAMPLES.

The amount of the copolymer based on 100% by mass of the rubber component is preferably not less than 5% by mass, more preferably not less than 10% by mass, and still more preferably not less than 40% by mass. If the amount is less than 5% by mass, the effects of improving the fuel economy, wet grip performance, and dry grip performance may not be obtained. The amount of the copolymer is preferably not more than 90% by mass, more preferably not more than 80% by mass, and still more preferably not more than 60% by mass. If the amount is more than 90% by mass, higher costs are required, and additionally the abrasion resistance may be degraded.

The copolymer may be used in combination with other rubber materials. Preferred examples of other rubber materials include diene rubbers. Examples of diene rubbers include natural rubber (NR) and synthetic diene rubbers. Examples of synthetic diene rubbers include isoprene rubber (IR), butadiene rubber (BR), styrene butadiene rubber (SBR), acrylonitrile butadiene rubber (NBR), chloroprene rubber (CR), and butyl rubber (IIR). In particular, in order to provide fuel economy, wet grip performance, and dry grip performance together while maintaining the balance between them, NR, BR, and SBR are preferred. More preferably, all of NR, BR, and SBR are used in combination with the copolymer. These rubber materials may be used alone, or two or more of these may be used in combination.

The amount of NR based on 100% by mass of the rubber component is preferably not less than 5% by mass, and more preferably not less than 10% by mass. Additionally, the amount is preferably not more than 40% by mass, and more preferably not more than 30% by mass. The use of NR in an amount within the range mentioned above provides fuel economy, wet grip performance, and dry grip performance together while maintaining the balance between

them.

The amount of BR based on 100% by mass of the rubber component is preferably not less than 5% by mass, and more preferably not less than 8% by mass. Additionally, the amount is preferably not more than 30% by mass, and more preferably not more than 20% by mass. The use of BR in an amount within the range mentioned above provides fuel economy, wet grip performance, and dry grip performance together while maintaining the balance between them.

The amount of SBR based on 100% by mass of the rubber component is preferably not less than 5% by mass, and more preferably not less than 10% by mass. Additionally, the amount is preferably not more than 95% by mass, more preferably not more than 90% by mass, still more preferably not more than 75% by mass, and particularly preferably not more than 50% by mass. The use of SBR in an amount within the range mentioned above provides fuel economy, wet grip performance, and dry grip performance together while maintaining the balance between them.

(Structure silica (linear silica))

The structure silica (linear silica) used in the present invention includes particles (hereinafter, branched particles Zs) each of which is adjacent to at least three particles, and has a branched structure formed by branched particles Zs and their adjacent particles. The "branched particle Zs" corresponds to particles Zs that are each adjacent to at least three other particles as shown in Fig. 1 that is a schematic view illustrating branched particles. Structure silicas include those having a branched structure (for example, see Fig. 2); and those having no branched structure. Structure silica having no branched structure easily aggregates, and practically does not exist.

The structure silica has an average length ($W^1$ in Fig. 2) between branched particles Z-Z inclusive of the branched particles Zs of not less than 30 nm, preferably not less than 40 nm. If $W^1$ is less than 30 nm, the dry grip performance may not be sufficiently improved. Also, $W^1$ is not more than 400 nm, preferably not more than 200 nm, and still more preferably not more than 100 nm. If $W^1$ is more than 400 nm, the hysteresis loss tends to be increased and the fuel economy tends to be degraded.

The structure silica preferably has an average primary particle size (D, see Fig. 2 that is a schematic view of structure silica including branched particles) of not less than 5 nm, more preferably not less than 7 nm. If D is less than 5 nm, the hysteresis loss tends to be increased and the fuel economy tends to be degraded. Also, D is preferably not more than 1000 nm, more preferably not more than 100 nm, and still more preferably 18 nm. If D is more than 1000 nm, the dry grip performance may not be sufficiently improved.

The structure silica preferably has an average aspect ratio ($W^1$/D) determined between branched particles Z-Z inclusive of the branched particles Zs of not less than 3, more preferably not less than 4. If the ratio is less than 3, the dry grip performance may not be sufficiently improved. Also, $W^1$/D is preferably not more than 100, and more preferably not more than 30. If $W^1$/Dis more than 100, the hysteresis loss tends to be increased and the fuel economy tends to be degraded.

In the present invention, the D, $W^1$, and $W^1$/D of silica can be determined by analyzing silica dispersed in a vulcanized rubber composition using a transmission electron microscope. For example, in the case where each particle shown in Fig. 2 is spherical, $W^1$/D is 5.

The amount of the structure silica relative to 100 parts by mass of the rubber component is not less than 5 parts by mass, preferably not less than 10 parts by mass, and more preferably not less than 30 parts by mass. If the amount is less than 5 parts by mass, the addition of the structure silica may result in insufficient effects. Additionally, the amount of the structure silica is not more than 150 parts by mass, preferably not more than 120 parts by mass, more preferably not more than 100 parts by mass, and still more preferably not more than 70 parts by mass. If the amount is more than 150 parts by mass, the rubber composition has high rigidity, and may have bad processability and poor wet grip performance.

The proportion of the structure silica based on 100% by mass in total of the structure silica and carbon black is preferably not less than 60% by mass, more preferably not less than 85% by mass, and still more preferably not less than 95% by mass. The upper limit thereof is not limited at all. The use of the structure silica in an amount within the range mentioned above improves the fuel economy, wet grip performance, and dry grip performance together to high levels while maintaining the balance between them.

(Silane coupling agent)

In the present invention, the structure silica is preferably used with a silane coupling agent. The silane coupling agent is not limited at all, and those widely used in the tire industries can be used. Examples thereof include sulfide silane coupling agents, mercapto silane coupling agents, vinyl silane coupling agents, amino silane coupling agents, glycidoxy silane coupling agents, nitro silane coupling agents, and chloro silane coupling agents. In particular, sulfide silane coupling agents, such as bis(3-triethoxysilylpropyl)tetrasulfide, bis(2-triethoxysilylethyl)tetrasulfide, bis(3-triethoxysilylpropyl)disulfide, and bis(2-triethoxysilylethyl)disulfide, are suitably used. In particular, in order to ensure effects of

improving the reinforcing property of the rubber composition, bis(3-triethoxysilylpropyl)tetrasulfide and 3-trimethoxysilylpropylbenzothiazolyltetrasulfide are preferred. These silane coupling agents may be used alone, or two or more of these may be used in combination.

The amount of silane coupling agent is preferably not less than 1 part by mass, and more preferably not less than 2 parts by mass, relative to 100 parts by mass of the structure silica. If the amount of silane coupling agent is less than 1 part by mass, the rubber composition before vulcanization is too viscous, and therefore tends to be difficult to process. Additionally, the amount of silane coupling agent is preferably not more than 20 parts by mass, more preferably not more than 15 parts by mass, and still more preferably not more than 10 parts by mass, relative to 100 parts by mass of the structure silica. If the amount of silane coupling agent is more than 20 parts by mass, effects proportional to the amount may not be obtained, and higher costs may be required.

(Antioxidant)

The rubber composition of the present invention may optionally contain an antioxidant. The antioxidant can be appropriately selected from amine compounds, phenol compounds, imidazole compounds, metal salts of carbamic acid, waxes, and the like.

(Softener)

Examples of softeners include petroleum softeners, such as process oil, lubricating oil, paraffin, liquid paraffin, petroleum asphalt, and petrolatum; fatty oil-based softening agents such as soybean oil, palm oil, castor oil, linseed oil, rapeseed oil, and coconut oil; waxes such as tall oil, factice, beeswax, carnauba wax, and lanolin; and fatty acids such as linoleic acid, palmitic acid, stearic acid, and lauric acid. The softener is preferably used in an amount of not more than 100 parts by mass, more preferably not more than 10 parts by mass relative to 100 parts by mass of the rubber component. The use thereof within such a range is less likely to degrade the wet grip performance.

(Vulcanizing agent)

The rubber composition of the present invention may optionally contain a vulcanizing agent. The vulcanizing agent may be an organic peroxide or a sulfur-containing vulcanizing agent. Examples of organic peroxides include benzoyl peroxide, dicumyl peroxide, di-t-butyl peroxide, t-butyl cumyl peroxide, methyl ethyl ketone peroxide, cumene hydroperoxide, 2,5-dimethyl-2,5-di(t-butylperoxy)hexano, 2,5-dimethyl-2,5-di(benzoylperoxy)hexane, 2,5-dimethyl-2,5-di(t-butylperoxy)hexine-3, and 1,3-bis(t-butylperoxypropyl)benzene. Examples of sulfur-containing vulcanizing agents include sulfur and morpholine disulfide. Among these, preferred is sulfur.

(Vulcanization accelerator)

The rubber composition of the present invention may optionally contain a vulcanization accelerator. Examples of the vulcanization accelerator include sulfenamide vulcanization accelerators, thiazole vulcanization accelerators, thiuram vulcanization accelerators, thiourea vulcanization accelerators, guanidine vulcanization accelerators, dithiocarbamic acid vulcanization accelerators, aldehyde-amine vulcanization accelerators, aldehyde-ammonia vulcanization accelerators, imidazoline vulcanization accelerators, and xanthate vulcanization accelerators. These may be used alone, or two or more of these may be used in combination.

(Vulcanization activator)

The rubber composition of the present invention may optionally contain a vulcanization activator. The vulcanization activator may be stearic acid, zinc oxide, or the like.

(Other components)

The rubber composition of the present invention may optionally contain other compounding agents and additives used in tire rubber compositions and general rubber compositions, such as reinforcing agents, plasticizers, and coupling agents. These compounding agents and additives can be used in amounts commonly employed.

<Preparation of rubber composition>

The rubber composition of the present invention can be prepared by any of conventional methods without

limitation. The composition is prepared by, for example, mixing the ingredients under commonly used conditions by an ordinary method using a kneader such as a Banbury mixer or a mixing roll.

In particular, in order to easily prepare the rubber composition of the present invention in which structure silica is formed, it is preferred that a silica sol be mixed with the rubber component including the copolymer using a rubber kneader. More preferably, the rubber composition is prepared by a method including the following steps:

(I) a base mixing step of mixing the rubber component containing the copolymer, a silica sol, and optionally agents such as carbon black, a silane coupling agent, zinc oxide, stearic acid, a softener, an antioxidant, and an wax at 80 to 180°C (preferably at 90 to 170°C) for 3 to 10 minutes;
(II) a final mixing step of mixing a mixture obtained in the base mixing step with a vulcanizing agent and a vulcanization accelerator at 30 to 70°C (preferably at 40 to 60°C) for 3 to 10 minutes; and
(III) a vulcanizing step of vulcanizing an unvulcanized rubber composition obtained in the final mixing step at 150 to 190°C (preferably at 160 to 180°C) for 5 to 30 minutes.

The preferred amount of silica sol, calculated as silica, is as described for the structure silica.

If the materials are mixed in toluene, which is a good solvent for rubber, in a mixing step (e.g. the base mixing step) for forming the structure silica, the resulting structure silica tends to have an excessively large $W^1$. Therefore, the mixing is preferably carried out without toluene.

The term "silica sol" herein refers to a colloid solution in which silica is dispersed in a solvent. The silica sol is not limited at all, and is preferably a colloid solution in which slender particles of silica are dispersed in a solvent because the structure silica is readily formed. A colloid solution (organosilica sol) in which slender particles of silica are dispersed in an organic solvent is more preferred. The "slender particles of silica" herein refers to chain-like structures (secondary particles) of silica consisting of multiple spherical or granular primary particles linked. Either linear or branched structures may be used.

Any solvent for dispersing silica can be used without limitation, and preferred examples are alcohols, such as methanol and isopropanol. Isopropanol is more preferred.

The silica (secondary particles) in the silica sol preferably consists of primary particles with an average particle size of 1 to 100 nm, more preferably 5 to 80 nm.

The average particle size of primary particles is determined as the average (average diameter) of the particle sizes of 50 primary particles visually measured in photographs taken by a transmission electron microscope JEM 2100FX available from JEOL Ltd.

In the case of slender particles of silica (secondary particles), the average size of primary particles is determined as an average of the thickness (diameter) measured at randomly selected 50 points of silica (secondary particles) in an electron microscope photography. In the case of connected bead-shaped silica (secondary particles) with recessed portions, it is determined as an average of the diameter of each of 50 beads in an electron microscope photograph. In the case of beads each having longer and shorter diameters, that is, slender beads, their short diameter is measured.

The silica (secondary particles) in the silica sol preferably has an average particle size of 20 to 300 nm, more preferably 30 to 150 nm. The average particle size of the silica (secondary particles) can be determined by dynamic light scattering, specifically as follows.

The average particle size of the silica (secondary particles) is measured using a laser particle analyzing system ELS-8000 available from Otsuka Electronics Co., Ltd. (based on cumulant analysis). The measurement is carried out at a temperature of 25°C and an angle between incoming light and the detector of 90° in a number of measurement cycles of 100, and the refraction index of water (1.333) is input as the refraction index of the dispersion solvent. The measurement is typically carried out at a concentration of about $5\times10^{-3}$% by mass.

The silica (secondary particles) can be prepared by, for example, the method disclosed in claim 2 and relevant parts in the description of WO 00/15552, and the method disclosed in Japanese Patent No. 2803134, and the method disclosed in claim 2 and relevant parts in Japanese Patent No. 2926915.

Specific examples of the silica (secondary particles) in the present invention include "'SNOWTEX-OUP" (average secondary particle size: 40 to 100 nm) available from Nissan Chemical Industries, Ltd., "SNOWTEX-UP" (average secondary particle size: 40 to 100 nm) available from Nissan Chemical Industries, Ltd., "SNOWTEX PS-M" (average secondary particle size: 80 to 150 nm) available from Nissan Chemical Industries, Ltd., "SNOWTEX PS-MO" (average secondary particle size: 80 to 150 nm) available from Nissan Chemical Industries, Ltd., "SNOWTEX PS-S" (average secondary particle size: 80 to 120 nm) available from Nissan Chemical Industries, Ltd., "SNOWTEX PS-SO" (average secondary particle size: 80 to 120 nm) available from Nissan Chemical Industries, Ltd., "IPA-ST-UP" (average secondary particle size: 40 to 100 nm), and "Quartron PL-7" (average secondary particle size: 130 nm) available from Fuso Chemical Co., Ltd. In particular, IPA-ST-UP is preferred because structure silica can be successfully formed.

The use of the rubber composition of the present invention thus obtained provides a pneumatic tire whose fuel economy, wet grip performance, and dry grip performance are improved together while maintaining the balance between

them. The rubber composition can be used for any components of tires, and is suitable for treads and side walls.

<Pneumatic tire>

The pneumatic tire of the present invention can be manufactured by an ordinary method using the above-described rubber composition.

Specifically, an unvulcanized rubber composition containing the above-mentioned components is extruded and processed into the shape of a desired tire component such as a tread, and assembled with other tire components into an unvulcanized tire by an ordinary method using a tire building machine. This unvulcanized tire is then heated and pressed in a vulcanizer. In this way, the pneumatic tire is manufactured.

EXAMPLES

The present invention is more specifically described with reference to examples, but the present invention is not limited to these examples.

The chemical agents used in synthesis and polymerization reactions are described below. These agents were purified in accordance with common methods, if necessary. n-Hexane: product of Kanto Chemical Co., Inc. Styrene: product of Kanto Chemical Co., Inc. 1,3-Butadiene: product of Tokyo Chemical Industry Co., Ltd. p-Methoxystyrene: product of Kanto Chemical Co., Inc. (a compound represented by the formula (I)) p-(tert-Butoxy)styrene: product of Wako Pure Chemical Industries, Ltd. (a compound represented by the formula (I)) Tetramethylethylenediamine: product of Kanto Chemical Co., Inc.

Modifier A-1: dimethylamine available from Kanto Chemical Co., Inc.
Modifier A-2: pyrrolidine available from Kanto Chemical Co., Inc.
Modifier A-3: AI-200 available from FMC Lithium (a compound represented by the following formula (s=2))

[Chem. 21]

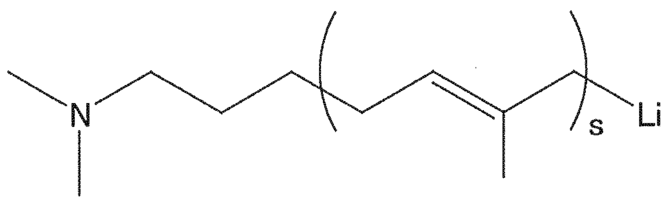

n-Butyllithium: 1.6 M n-butyllithium in hexane available from Kanto Chemical Co., Inc.
Modifier B-1: tetraethoxysilane available from Kanto Chemical Co., Inc.
Modifier B-2: 3-glycidoxypropyltrimethoxysilane available from AZmax. Co.
Modifier B-3: 3-(N,N-dimethylamino)propyltrimethoxysilane available from AZmax. Co.
2,6-tert-Butyl-p-cresol: NOCRAC 200 available from Ouchi Shinko Chemical Industrial Co., Ltd.

<Analysis of copolymer>

Copolymers prepared as described below were analyzed by the following methods.

(Measurement of weight average molecular weight Mw)

The weight average molecular weight Mw of the copolymers was determined using a gel permeation chromatograph (GPC) (GPC-8000 series available from Tosoh Corporation, detector: differential refractometer, column: TSKGEL SUPERMALTPORE HZ-M available from Tosoh Corporation) relative to polystyrene standards.

(Determination of copolymer structure)

In order to determine the structure of the copolymers, the copolymers were analyzed using a device of JNM-ECA series available from JEOL Ltd. Based on the results, the amounts of 1,3-butadiene, compounds represented by the formula (I) (p-methoxystyrene and p-(tert-butoxy) styrene), and styrene in the copolymers were calculated.

<Synthesis of copolymer>

(Copolymer (1))

A heat-resistant container was sufficiently purged with nitrogen, and charged with n-hexane (1500 ml), styrene (100 mmol), 1,3-butadiene (800 mmol), p-methoxystyrene (5 mmol), tetramethylethylenediamine (0.2 mmol), Modifier A-1 (0.12 mmol), and n-butyllithium (0.12 mmol). The mixture was stirred at 0°C for 48 hours. Then, Modifier B-1 (0.15 mmol) was added thereto, and the mixture was stirred at 0°C for 15 minutes. Thereafter, an alcohol was added to stop the reaction, and 2,6-tert-butyl-p-cresol (1 g) was added to the reaction solution. Subsequently, a copolymer (1) was obtained by reprecipitation purification. The weight average molecular weight of the copolymer (1) was 500,000, the amount of the compound represented by the formula (I) (the amount of alkoxystyrene units) was 1.1% by mass, and the amount of styrene (the amount of styrene units) was 19% by mass.

(Copolymers (2) to (15))

Copolymers were synthesized in the same manner as that for the copolymer (1). Table 1 shows the characteristics of the polymers.

[Table 1]

| | | Copolymer | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| n-Hexane | ml | 1500 | 1500 | 1500 | 1500 | 1500 | 1500 | 1500 | 1500 | 1500 | 1500 | 1500 | 1500 | 1500 | 1500 | 1500 |
| Styrene | mmol | 100 | 100 | 100 | 100 | 100 | 100 | 100 | 150 | 100 | 100 | 100 | 100 | 100 | 100 | 100 |
| 1,3-Butadiene | mmol | 800 | 800 | 800 | 800 | 800 | 800 | 800 | 800 | 800 | 800 | 800 | 800 | 800 | 800 | 800 |
| p-Methoxystyrene | mmol | 5 | 5 | 5 | 5 | - | - | - | - | - | - | - | 5 | 5 | - | - |
| P-(t-Butoxy)styrene | mmol | - | - | - | - | 5 | 5 | 5 | 20 | 1 | - | 5 | - | - | - | - |
| Tetramethylethylenediamine | mmol | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Modifier A-1 | mmol | 0.12 | 0.12 | 0.12 | - | 0.12 | 0.12 | 0.12 | 0.12 | 0.12 | - | - | 0.12 | - | 0.12 | - |
| Modifier A-2 | mmol | - | - | - | 0.12 | - | - | - | - | - | - | - | - | - | - | - |
| Modifier A-3 | mmol | - | - | - | - | - | - | - | - | - | - | 0.12 | - | - | - | - |
| n-Butyllithium | mmol | 0.12 | 0.12 | 0.12 | 0.12 | 0.12 | 0.12 | 0.12 | 0.12 | 0.12 | 0.12 | - | 2 | 0.12 | 0.12 | 0.12 |
| Modifier B-1 | mmol | 0.15 | - | - | - | 0.15 | - | - | - | - | - | - | 0.15 | - | - | 0.15 |
| Modifier B-2 | mmol | - | 0.15 | - | - | - | 0.15 | - | - | - | - | - | - | - | - | - |
| Modifier B-3 | mmol | - | - | 0.15 | 0.15 | - | - | 0.15 | 0.15 | 0.15 | - | 0.15 | - | - | - | - |
| 2,6-tert-Butyl-p-cresol | g | 1 | 1 | 1 | 1 | 1 | 1 | 1 | 1 | 1 | 1 | 1 | 1 | 1 | 1 | 1 |
| Weight average molecular weight($\times 10^5$) | | 5 | 4.7 | 4.5 | 4.8 | 4.8 | 4.9 | 4.7 | 5.5 | 4.6 | 4.6 | 4.7 | 0.3 | 5 | 5 | 5 |
| Amount of compound of formula (I) | % | 1.1 | 1.2 | 1.3 | 1.1 | 1.2 | 1.2 | 1.1 | 5.8 | 0.2 | - | 1.2 | 1.1 | 1.1 | 1.1 | 1.1 |
| Amount of styrene | % | 19 | 19 | 19 | 19 | 19 | 19 | 19 | 23 | 19 | 19 | 20 | 18 | 19 | 19 | 19 |

<Examples and Comparative Examples>

Chemicals used in the examples and comparative examples are listed below.

NR: RSS#3
BR: UBEPOL BR150B available from Ube Industries, Ltd.
SBR: SL574 available from JSR Corp.
Copolymers (1) to (15): synthesized as described above Silica A: Organosilica sol IPA-ST-UP available from Nissan Chemical Industries, Ltd. (silica sol with slender particles of silica dispersed in isopropanol (average particle size of silica (secondary particles) determined by dynamic light scattering: 40 to 100 nm), silica content: 15% by mass) (the amounts shown in Tables 2 and 3 are the amounts of silica in the organosilica sol.)
Silica B: ULTRASIL VN3 (silica particles, $N_2SA$: 175 m2/g, available from EVONIK DEGUSSA)
Silane coupling agent: Si 69
(bis(3-triethoxysilylpropyl)tetrasulfide, available from EVONIK DEGUSSA)
Antioxidant: NOCRAC 6C
(N-1,3-dimethylbutyl-N'-phenyl-p-phenylenediamine) available from Ouchi Shinko Chemical Industrial Co., Ltd.
Stearic acid: stearic acid available from NOF CORP.
Zinc oxide: zinc oxide #1 available from Mitsui Mining & Smelting Co., Ltd.
Sulfur: powdered sulfur available from Tsurumi Chemical Industry Co., Ltd.
Vulcanization accelerator (1): NOCCELER CZ
(N-cyclohexyl-2-benzothiazolylsulfenamide) available from Ouchi Shinko Chemical Industrial Co., Ltd.
Vulcanization accelerator (2) : NOCCELER D (diphenylguanidine) available from Ouchi Shinko Chemical Industrial Co., Ltd.

Each of the combinations of materials shown in Tables 2 and 3 except the sulfur and vulcanization accelerators was mixed in a 1.7-L Banbury mixer available from KOBE STEEL, LTD. at 80 to 180°C for 5 minutes to obtain a kneaded mixture. Next, the sulfur and vulcanization accelerator were added to the kneaded mixture, and they were mixed using an open roll mill at 50°C for 5 minutes to obtain an unvulcanized rubber composition. A portion of the unvulcanized rubber composition was vulcanized at 170°C for 12 minutes into a vulcanized rubber composition.

Another portion of the unvulcanized rubber composition was formed into a tread shape, and assembled with other tire components into an unvulcanized tire using a tire building machine. The tire was vulcanized at 170°C for 12 minutes to obtain a test tire (tire size: 195/65R15).

The vulcanized rubber compositions and test tires thus obtained were evaluated for their performance by the methods described below.

<Evaluated item and test method>

(Fuel economy)

The tan δ of the vulcanized rubber compositions was measured using a spectrometer available from Ueshima Seisakusho Co., Ltd. at a dynamic strain of 1%, a frequency of 10 Hz, and a temperature of 50°C. The measured value is expressed as an index using the equation shown below. A higher index indicates smaller rolling resistance and better fuel economy.

$$(\text{Fuel economy index}) = (\tan\delta \text{ of Comparative Example 1})/(\tan\delta \text{ of each formulation}) \times 100$$

(Wet grip performance (1))

The wet grip performance was evaluated using a flat belt friction tester (FR5010 Series) available from Ueshima Seisakusho Co., Ltd. A cylindrical rubber test piece with a width of 20 mm and a diameter of 100 mm was prepared from each vulcanized rubber composition. The slip ratio of the test pieces on a road surface was varied from 0 to 70% at a speed of 20 km/hour, a load of 4 kgf, and a road surface temperature of 20°C, and the maximum value of the friction coefficient detected during the variations was read. The measured value is expressed as an index using the equation shown below. A higher index indicates higher wet grip performance.

(Index of wet grip performance (1))=(maximum friction coefficient of each formulation)/(maximum friction coefficient of Comparative Example 1)×100

(Wet grip performance (2))

The test tires were mounted on the wheels of an FR car (engine size: 2000 cc) made in Japan. In a test course with a wet road surface to which water had been sprinkled, the running distance required for the vehicle to stop after braking tires at 70 km/h (i.e. braking distance) was measured. The measured value is expressed as an index using the equation shown below. A higher index indicates higher wet grip performance.

(Index of wet grip performance (2))=(braking distance of Comparative Example 1)/(braking distance of each formulation)×100

(Dry grip performance)

The dry grip performance was evaluated using a flat belt friction tester (FR5010 Series) available from Ueshima Seisakusho Co., Ltd. A cylindrical rubber test piece with a width of 20 mm and a diameter of 100 mm was prepared from each vulcanized rubber composition. The slip ratio of the test pieces on a dry road surface was varies from 0 to 50% at a speed of 20 km/hour, a load of 4 kgf, and an outside temperature of 30°C, and the maximum value of the friction coefficient detected during the variations was read. The measured value is expressed as an index using the equation shown below. A higher index indicates higher dry grip performance.

(Index of dry grip performance)=(maximum friction coefficient of each formulation)/(maximum friction coefficient of Comparative Example 1)×100

(Average primary particle size, average length, and average aspect ratio of silica)

A test piece was cut out from the tread of each test tire, and the silica dispersed therein was observed using a transmission electron microscope to calculate the average primary particle size (D), average length between branched particles Z-Z inclusive of the branched particles Zs ($W^1$ in Fig. 2), average length between branched particles Z-Z exclusive of the branched particles Zs ($W^2$ in Fig. 2), average aspect ratio determined between branched particles Z-Z inclusive of the branched particles Zs ($W^1/D$), and average aspect ratio determined between branched particles Z-Z exclusive of the branched particles Zs ($W^2/D$) of the silica. The silica was measured at 30 points, and the average was employed.

[Table 2]

| | | Ex. 1 | Ex. 2 | Ex. 3 | Ex. 4 | Ex. 5 | Ex. 6 | Ex. 7 | Ex. 8 | Ex. 9 | Ex. 10 | Ex. 11 |
|---|---|---|---|---|---|---|---|---|---|---|---|---|
| Amount (parts by mass) | NR | 20 | 20 | 20 | 20 | 20 | 20 | 20 | 20 | 20 | 20 | 20 |
| | BR | 10 | 10 | 10 | 10 | 10 | 10 | 10 | 10 | 10 | 10 | 10 |
| | SBR | 55 | 55 | 55 | 55 | 55 | 55 | 55 | 55 | 55 | 20 | 55 |
| | Copolymer (1) | 15 | — | — | — | — | — | — | — | — | — | — |
| | Copolymer (2) | — | 15 | — | — | — | — | — | — | — | — | — |
| | Copolymer (3) | — | — | 15 | — | — | — | — | — | — | — | — |
| | Copolymer (4) | — | — | — | 15 | — | — | — | — | — | 50 | — |
| | Copolymer (5) | — | — | — | — | 15 | — | — | — | — | — | — |
| | Copolymer (6) | — | — | — | — | — | 15 | — | — | — | — | — |
| | Copolymer (7) | — | — | — | — | — | — | 15 | — | — | — | — |
| | Copolymer (8) | — | — | — | — | — | — | — | 15 | — | — | — |
| | Copolymer (9) | — | — | — | — | — | — | — | — | 15 | — | — |
| | Copolymer (10) | — | — | — | — | — | — | — | — | — | — | — |
| | Copolymer (11) | — | — | — | — | — | — | — | — | — | — | 15 |
| | Copolymer (12) | — | — | — | — | — | — | — | — | — | — | — |
| | Copolymer (13) | — | — | — | — | — | — | — | — | — | — | — |
| | Copolymer (14) | — | — | — | — | — | — | — | — | — | — | — |
| | Copolymer (15) | — | — | — | — | — | — | — | — | — | — | — |
| | Silica A | 50 | 50 | 50 | 50 | 50 | 50 | 50 | 50 | 50 | 50 | 50 |
| | Silica B | — | — | — | — | — | — | — | — | — | — | — |
| | Silane coupling agent | 4 | 4 | 4 | 4 | 4 | 4 | 4 | 4 | 4 | 4 | 4 |
| | Antioxidant | 1 | 1 | 1 | 1 | 1 | 1 | 1 | 1 | 1 | 1 | 1 |
| | Stearic acid | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 |
| | Vulcanization accelerator (1) | 1 | 1 | 1 | 1 | 1 | 1 | 1 | 1 | 1 | 1 | 1 |
| | Vulcanization accelerator (2) | 0.5 | 0.5 | 0.5 | 0.5 | 0.5 | 0.5 | 0.5 | 0.5 | 0.5 | 0.5 | 0.5 |
| Shape of silica | Average primary particle size of silica (D, nm) | 13 | 13 | 14 | 13 | 14 | 13 | 13 | 14 | 13 | 13 | 12 |
| | Average length between branched particles exclusive of branched particles ($W^2$, nm) | 42 | 41 | 42 | 41 | 43 | 41 | 42 | 43 | 42 | 43 | 42 |
| | Average length between branched particles inclusive of branched particles ($W^1$, nm) | 55 | 56 | 55 | 55 | 55 | 54 | 56 | 56 | 55 | 55 | 55 |
| | Average aspect ratio determined between branched particles exclusive of branched particles ($W^2/D$) | 3.2 | 3.3 | 3.1 | 3.3 | 3.2 | 3.1 | 3.2 | 3.2 | 3.3 | 3.2 | 3.2 |
| | Average aspect ratio determined between branched particles inclusive of branched particles ($W^1/D$) | 4.2 | 4.0 | 4.2 | 4.1 | 4.2 | 4.1 | 4.2 | 4.2 | 4.2 | 4.3 | 4.2 |
| Evaluation | Fuel economy | 118 | 121 | 125 | 125 | 112 | 121 | 123 | 114 | 123 | 142 | 117 |
| | Wet grip performance (1) | 119 | 120 | 125 | 125 | 116 | 116 | 122 | 116 | 119 | 140 | 125 |
| | Wet grip performance (2) | 118 | 121 | 128 | 126 | 114 | 117 | 115 | 115 | 116 | 138 | 115 |
| | Dry grip performance | 118 | 119 | 123 | 124 | 117 | 118 | 116 | 119 | 118 | 130 | 118 |

[Table 3]

| | | Com. Ex. 1 | Com. Ex. 2 | Com. Ex. 3 | Com. Ex. 4 | Com. Ex. 5 | Com. Ex. 6 | Com. Ex. 7 | Com. Ex. 8 | Com. Ex. 9 |
|---|---|---|---|---|---|---|---|---|---|---|
| Amount (parts by mass) | NR | 20 | 20 | 20 | 20 | 20 | 20 | 20 | 20 | 20 |
| | BR | 10 | 10 | 10 | 10 | 10 | 10 | 10 | 10 | 10 |
| | SBR | 55 | 55 | 55 | 55 | 55 | 55 | 55 | 55 | 55 |
| | Copolymer (1) | — | — | — | — | — | — | 15 | — | — |
| | Copolymer (2) | — | — | — | — | — | — | — | 15 | — |
| | Copolymer (3) | — | — | — | — | — | — | — | — | 15 |
| | Copolymer (4) | — | — | — | — | — | — | — | — | — |
| | Copolymer (5) | — | — | — | — | — | — | — | — | — |
| | Copolymer (6) | — | — | — | — | — | — | — | — | — |
| | Copolymer (7) | — | — | — | — | — | — | — | — | — |
| | Copolymer (8) | — | — | — | — | — | — | — | — | — |
| | Copolymer (9) | — | — | — | — | — | — | — | — | — |
| | Copolymer (10) | 15 | — | — | — | — | 15 | — | — | — |
| | Copolymer (11) | — | — | — | — | — | — | — | — | — |
| | Copolymer (12) | — | 15 | — | — | — | — | — | — | — |
| | Copolymer (13) | — | — | 15 | — | — | — | — | — | — |
| | Copolymer (14) | — | — | — | 15 | — | — | — | — | — |
| | Copolymer (15) | — | — | — | — | 15 | — | — | — | — |
| | Silica A | — | — | — | 50 | 50 | 50 | — | — | — |
| | Silica B | 50 | 50 | 50 | — | — | — | 50 | 50 | 50 |
| | Silane coupling agent | 4 | 4 | 4 | 4 | 4 | 4 | 4 | 4 | 4 |
| | Antioxidant | 1 | 1 | 1 | 1 | 1 | 1 | 1 | 1 | 1 |
| | Stearic acid | 2 | 2 | 2 | 2 | 2 | 2 | 2 | 2 | 2 |
| | Zinc oxide | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 |
| | Vulcanization accelerator (1) | 1 | 1 | 1 | 1 | 1 | 1 | 1 | 1 | 1 |
| | Vulcanization accelerator (2) | 0.5 | 0.5 | 0.5 | 0.5 | 0.5 | 0.5 | 0.5 | 0.5 | 0.5 |
| Shape of silica | Average primary particle size of silica (D, nm) | 20 | 20 | 21 | 13 | 12 | 13 | 23 | 20 | 20 |
| | Average length between branched particles exclusive of branched particles ($W^2$, nm) | 24 | 25 | 24 | 42 | 42 | 42 | 24 | 23 | 24 |
| | Average length between branched particles inclusive of branched particles ($W^1$, nm) | 24 | 22 | 23 | 55 | 54 | 55 | 25 | 24 | 24 |
| | Average aspect ratio determined between branched particles exclusive of branched particles ($W^2$/D) | 1.2 | 1.1 | 1.2 | 3.2 | 3.2 | 3.2 | 1.1 | 1.2 | 1.2 |
| | Average aspect ratio determined between branched particles inclusive of branched particles ($W^1$/D) | 1.3 | 1.2 | 1.2 | 4.3 | 4.2 | 4.1 | 1.1 | 1.2 | 1.2 |
| Evaluation | Fuel economy | 100 | 70 | 102 | 104 | 107 | 101 | 116 | 117 | 122 |
| | Wet grip performance (1) | 100 | 110 | 102 | 107 | 109 | 105 | 112 | 113 | 118 |
| | Wet grip performance (2) | 100 | 106 | 101 | 107 | 107 | 104 | 113 | 115 | 120 |
| | Dry grip performance | 100 | 103 | 100 | 112 | 112 | 110 | 106 | 107 | 110 |

As shown in Tables 2 and 3, the compositions of the examples, which contained a rubber component containing a copolymer obtained by copolymerization of 1,3-butadiene, styrene, and a compound represented by the formula (I), having an amino group at a first chain end and a functional group containing at least one atom selected from the group consisting of nitrogen, oxygen, and silicon at a second chain end, and having a weight average molecular weight within a specific range, and a specific silica, showed improved fuel economy, wet grip performance, and dry grip performance

together while maintaining the balance between them.

Comparisons between Comparative Examples 1, 6, and 7 and Example 1, between Comparative Examples 1, 6, and 8 and Example 2, and between Comparative Examples 1, 6, and 9 and Example 3 revealed that the combination of the copolymer and the specific silica synergistically improves the fuel economy, wet grip performance, and dry grip performance.

REFERENCE SIGNS LIST

Z Branched particle

**Claims**

1. A rubber composition, comprising:

a rubber component comprising a copolymer; and
a silica,
wherein the copolymer is obtained by copolymerization of 1,3-butadiene, styrene, and a compound represented by formula (I) below, has an amino group at a first chain end and a functional group containing at least one atom selected from the group consisting of nitrogen, oxygen, and silicon at a second chain end, and has a weight average molecular weight of $1.0\times10^5$ to $2.5\times10^6$, and
the silica has an average length $W^1$ between branched particles Z-Z inclusive of the branched particles Zs of 30 to 400 nm, wherein the branched particles Zs are each adjacent to at least three particles;

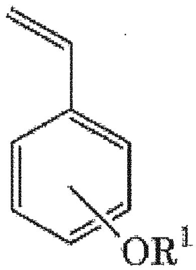
(I)

wherein $R^1$ represents a C1 to C10 hydrocarbon group.

2. A rubber composition, obtained by mixing a silica sol and a copolymer,
wherein the copolymer is obtained by copolymerization of 1,3-butadiene, styrene, and a compound represented by formula (I) below, has an amino group at a first chain end and a functional group containing at least one atom selected from the group consisting of nitrogen, oxygen, and silicon at a second chain end, and has a weight average molecular weight of $1.0\times10^5$ to $2.5\times10^6$;

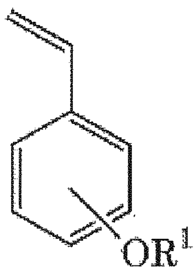
(I)

wherein $R^1$ represents a C1 to C10 hydrocarbon group.

3. The rubber composition according to claim 1 or 2,
wherein the functional group is an alkoxysilyl group.

**4.** The rubber composition according to claim 1 or 2, wherein the functional group is a combination of an alkoxysilyl group and an amino group.

**5.** The rubber composition according to any one of claims 1 to 4, wherein the amino group at the first chain end is an alkylamino group or a group represented by the following formula (II) :

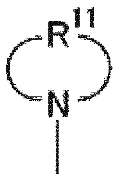

(II)

wherein $R^{11}$ represents a divalent C2 to C50 hydrocarbon group optionally containing at least one of nitrogen and oxygen atoms.

**6.** The rubber composition according to claim 5, wherein the group represented by the formula (II) is a group represented by the following formula (III):

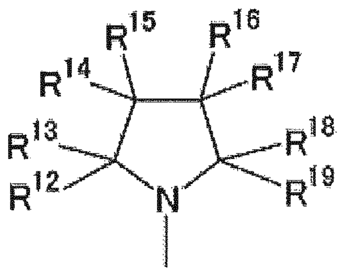

(III)

wherein $R^{12}$ to $R^{19}$, which may be the same or different, each represent a hydrogen atom or a C1 to C5 hydrocarbon group optionally containing at least one of nitrogen and oxygen atoms.

**7.** The rubber composition according to any one of claims 1 to 6, wherein the copolymer has, in addition to the amino group, an isoprene unit at the first chain end.

**8.** The rubber composition according to any one of claims 1 to 7, wherein the copolymer comprises 0.05 to 35% by mass of the compound represented by the formula (I).

**9.** The rubber composition according to any one of claims 1 to 8, wherein the copolymer is obtained by copolymerizing 1,3-butadiene, styrene, and the compound represented by the formula (I) using a compound containing a lithium atom and an amino group as a polymerization initiator, and modifying a polymerizing end of the resulting copolymer with a modifier containing a functional group containing at least one atom selected from the group consisting of nitrogen, oxygen, and silicon.

**10.** The rubber composition according to claim 9, wherein the modifier is a compound represented by the following formula (IV), (V), or (VI):

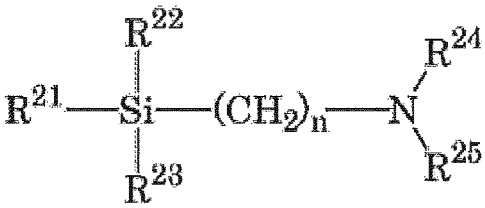

(IV)

wherein $R^{21}$, $R^{22}$, and $R^{23}$, which may be the same or different, each represent an alkyl, alkoxy, silyloxy, carboxyl,

or mercapto group, or a derivative of any of these groups; $R^{24}$ and $R^{25}$, which may be the same or different, each represent a hydrogen atom or an alkyl group; and n represents an integer;

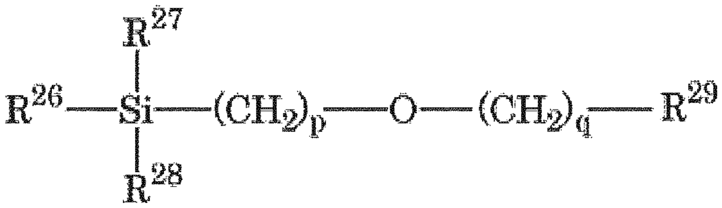
(V)

wherein $R^{26}$ , $R^{27}$, and $R^{28}$, which may be the same or different, each represent an alkyl, alkoxy, silyloxy, carboxyl, or mercapto group, or a derivative of any of these groups; $R^{29}$ represents a cyclic ether group; and p and q each represent an integer;

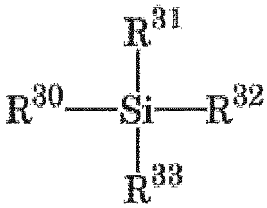
(VI)

wherein $R^{30}$ to $R^{33}$, which may be the same or different, each represent an alkyl, alkoxy, silyloxy, carboxyl, or mercapto group, or a derivative of any of these groups.

**11.** The rubber composition according to claim 9 or 10,
wherein the polymerization initiator contains an alkylamino group or a group represented by the following formula (II) :

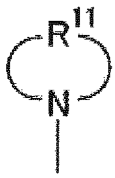
(II)

wherein $R^{11}$ represents a divalent C2 to C50 hydrocarbon group optionally containing at least one of nitrogen and oxygen atoms.

**12.** The rubber composition according to claim 11,
wherein the group represented by the formula (II) is a group represented by the following formula (III):

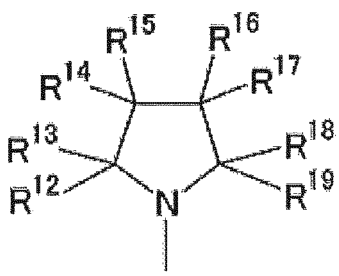
(III)

wherein $R^{12}$ to $R^{19}$, which may be the same or different, each represent a hydrogen atom or a C1 to C5 hydrocarbon group optionally containing at least one of nitrogen and oxygen atoms.

**13.** The rubber composition according to any one of claims 9 to 12,
wherein the polymerization initiator comprises an isoprene unit.

**14.** The rubber composition according to any one of claims 1 to 13, wherein the rubber component comprises the copolymer in an amount of not less than 5% by mass based on 100% by mass of the rubber component.

**15.** The rubber composition according to any one of claims 1 and 3 to 14, wherein the rubber composition comprises the silica in an amount of 5 to 150 parts by mass relative to 100 parts by mass of the rubber component.

**16.** The rubber composition according to any one of claims 1 and 3 to 15, wherein the silica has an average aspect ratio $W^1/D$ determined between branched particles Z-Z inclusive of the branched particles Zs of 3 to 100, wherein D is an average primary particle size.

**17.** The rubber composition according to any one of claims 1 and 3 to 16, wherein the silica has an average primary particle size D of 5 to 1000 nm.

**18.** The rubber composition according to any one of claims 1 and 3 to 17, comprising a silane coupling agent in an amount of 1 to 20 parts by mass relative to 100 parts by mass of silica.

**19.** The rubber composition according to any one of claims 1 to 18, which is for use as a rubber composition for a tire tread.

**20.** A pneumatic tire, formed from the rubber composition according to any one of claims 1 to 19.

FIG.1

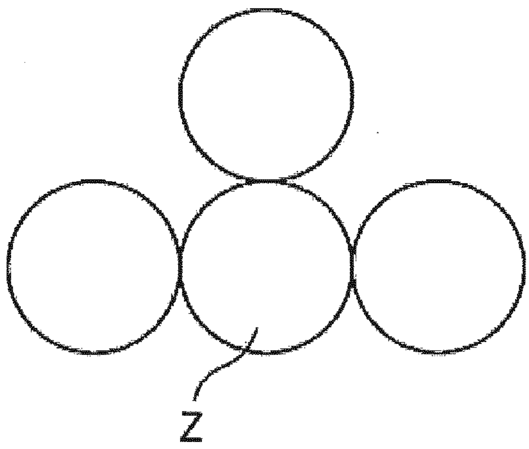


FIG.2

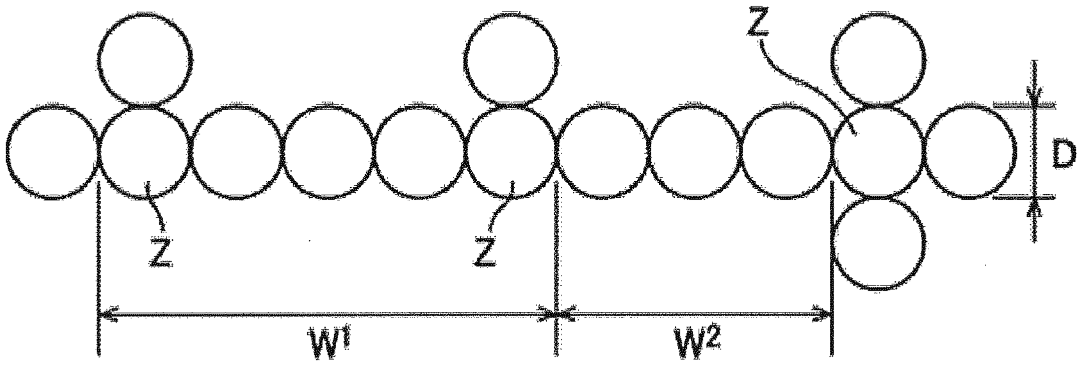

**INTERNATIONAL SEARCH REPORT**

International application No.
PCT/JP2012/071120

A. CLASSIFICATION OF SUBJECT MATTER
*C08L15/00*(2006.01)i, *B60C1/00*(2006.01)i, *C08K3/36*(2006.01)i, *C08K5/40*(2006.01)i

According to International Patent Classification (IPC) or to both national classification and IPC

B. FIELDS SEARCHED

Minimum documentation searched (classification system followed by classification symbols)
C08L15/00, B60C1/00, C08K3/36, C08K5/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-257260 A (Sumitomo Chemical Co., Ltd.), 28 September 2006 (28.09.2006), claims 1 to 9; paragraphs [0001], [0002], [0013], [0042], [0048] (Family: none) | 1-20 |
| Y | JP 2011-63714 A (Sumitomo Rubber Industries, Ltd.), 31 March 2011 (31.03.2011), claims 1 to 5; paragraphs [0006], [0017], [0022] (Family: none) | 1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 September, 2012 (12.09.12) | 25 September, 2012 (25.09.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2012/071120

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-154158 A (Sumitomo Rubber Industries, Ltd.), 21 June 2007 (21.06.2007), claims 1 to 4; paragraphs [0013], [0021], [0024], [0033], [0034], [0038] & US 2007/0112119 A1 & US 2007/0112121 A1 & EP 1790501 A1 & DE 602006001625 D & CN 1966556 A & RU 2006139788 A | 1-20 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010111754 A
- WO 0015552 A
- JP 2803134 B
- JP 2926915 B